(19) Europäisches Patentamt

European Patent Office

Office européen des brevets

(11) EP 4 567 655 A2

(12) EUROPEAN PATENT APPLICATION

(43) Date of publication:
11.06.2025 Bulletin 2025/24

(51) International Patent Classification (IPC):
*G06F 30/20* (2020.01)

(21) Application number: 25172985.1

(22) Date of filing: 20.05.2021

(52) Cooperative Patent Classification (CPC):
G06F 30/20; F42D 1/00; F42D 3/04; G06F 2111/10

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 21.05.2020 US 202063028345 P
11.12.2020 US 202063124412 P
19.05.2021 US 202117324704

(62) Document number(s) of the earlier application(s) in
accordance with Art. 76 EPC:
21807599.2 / 4 153 937

(71) Applicant: Dyno Nobel Inc.
Salt Lake City, UT 84121 (US)

(72) Inventors:
• PREECE, Dale S.
Saratoga Springs, Utah 84045 (US)
• BHUIYAN, A B M, Abdul Ali
Salt Lake City, Utah 84121 (US)

(74) Representative: Cleveland Scott York
5 Norwich Street
London EC4A 1DR (GB)

Remarks:
This application was filed on 28-04-2025 as a
divisional application to the application mentioned
under INID code 62.

(54) **DISTINCT ELEMENT ROCK BLASTING MOVEMENT METHODS, APPARATUSES, AND SYSTEMS**

(57) A blast modeling system may generate a site model based on blast input data. The blast input data may include blasthole data, bench information, and geology input data. The site model may comprise a plurality of distinct elements representing rock masses. Each element may have a geometric outline formed by connecting endpoints of one or more lines with arcs such that the endpoints of the one or more lines are indirectly coupled via the arcs. The blast modeling system may simulate a blast using the plurality of elements.

FIG. 1

EP 4 567 655 A2

**Description**

RELATED APPLICATION

The present application claims priority to United States Application No. 17/324,704, filed on May 19, 2021 and titled, "DISTINCT ELEMENT ROCK BLASTING MOVEMENT METHODS, APPARATUSES, AND SYSTEMS," United States Provisional Patent Application No. 63/124,412, filed on Dec 11, 2020 and titled, "DISTINCT ELEMENT ROCK BLASTING MOVEMENT METHODS, APPARATUSES, AND SYSTEMS," and United States Provisional Patent Application No. 63/028,345, filed on May 21, 2020 and titled, "DISTINCT ELEMENT ROCK BLASTING MOVEMENT METHODS, APPARATUSES, AND SYSTEMS," the contents of the aforementioned applications are hereby incorporated herein by reference in their entireties.

TECHNICAL FIELD

The present disclosure relates generally to explosives. More specifically, the present disclosure relates to methods, systems and apparatuses for designing a blast plan.

BRIEF DESCRIPTION OF THE SEVERAL VIEWS OF THE DRAWINGS

To easily identify the discussion of any particular element or act, the most significant digit or digits in a reference number refer to the figure number in which that element is first introduced.

FIG. 1 illustrates an advanced distinct element for blast simulations in accordance with one embodiment.

FIG. 2 illustrates an arc-to-arc contact detection technique that may be used by a modeling system to determine contact between arcs of neighboring elements in accordance with one embodiment.

FIG. 3 illustrates an arc-to-line contact detection technique in accordance with one embodiment.

FIG. 4 illustrates a way to detect line-to-line contact using the arc-to-line contact technique in accordance with one embodiment.

FIG. 5 illustrates a force calculation that a modeling system may use to determine a force applied to an advanced distinct element by contacting elements in accordance with one embodiment.

FIG. 6 illustrates a moment calculation to determine a moment applied to the advanced distinct element by contacting elements in accordance with one embodiment.

FIG. 7 illustrates a flowchart of a method for explosive blast modeling in accordance with one embodiment.

FIG. 8 illustrates a flowchart of a method for simulating a blast using in accordance with one embodiment.

FIG. 9 illustrates parameters of an input file that a modeling system may receive in accordance with one embodiment.

FIG. 10 illustrates geology input data in accordance with one embodiment.

FIG. 11 illustrates a blast model divided into a plurality of zones in accordance with one embodiment.

FIG. 12 illustrates a partially fragmented blast model in accordance with one embodiment.

FIG. 13 illustrates a partially fragmented blast model in accordance with one embodiment.

FIG. 14 illustrates a blast pit in accordance with one embodiment.

FIG. 15 illustrates a custom blast model in accordance with one embodiment.

FIG. 16 illustrates a top view of a blast pattern in accordance with one embodiment.

FIG. 17 illustrates a blast model with subdrilled blastholes in accordance with one embodiment.

FIG. 18 illustrates a rotation procedure to introduce a geology dip to a blast model in accordance with one embodiment.

FIG. 19 timing of burden release of distinct modeling elements in a blast model in accordance with one embodiment.

FIG. 20 illustrates a model for a simulation of buffer or choke blasting in accordance with one embodiment.

FIG. 21 illustrates a flowchart of a method for creating a model to simulate a blast in accordance with one embodiment.

FIG. 22 illustrates an item in accordance with one embodiment.

FIG. 23 illustrates a procedure for altering a shape of an element during a blast simulation.

FIG. 24 illustrates two circular elements that may be used by the modeling systems and methods described herein.

FIG. 25 illustrates three potential three-dimensional shapes that may be used as elements by the modeling systems and methods described herein.

## DETAILED DESCRIPTION

Explosives are commonly used in the mining, quarrying, and excavation industries for breaking rocks and ore. Generally, a hole, referred to as a "blasthole," is drilled in a surface, such as the ground. Explosives may then be placed within the blasthole. Typically, multiple blastholes are used for breaking large amounts of rocks and ore. Using multiple blastholes introduces complexities for planning for a blast. For example, a blast may vary based on a plurality of factors including blasthole spacing, blasthole burden, blasthole depth, blasthole pattern, the number of blastholes, geological properties, the type of explosive, the amount of explosive, and the blasthole initiation time. The number of possibilities makes blast planning difficult, even for a highly trained blast engineer.

Blast simulations performed by modeling systems may be used to predict an outcome of a blast. Modeling systems simulate a blast to predict rock movement and blast induced heave. Blast modeling systems can be used to determine the location of ore in a final muck pile after a blast occurs to assist with ore management for waste ore disposal and minimization of mixing waste ore and target ore.

Some blast modeling systems use distinct elements to simulate a blast. Distinct element modeling systems generate an assemblage of elements to represent a blast site and track the elements movement through time to simulate a blast. Individual element movement is caused by forces applied to the assemblage and usually also by gravity.

Some modeling systems using circular elements to represent rocks. An assemblage of two-dimensional circular elements moving through time due to explosive loading and gravity may be used to simulate a blast. Circles are very computationally efficient because interparticle contact can be determined by comparing the distance between the two circle centers with the sum of the radii of the circles. However, the circular elements oversimplify the rock masses which causes a loss in accuracy of the simulation. For example, circular elements do not generate friction between the elements or interact with one another the same way in which uneven rock masses would. Another challenge associated with spherical distinct elements is that they have no aspect ratio and are thus limited in the prediction of bulking or porosity creation in an assemblage of spherical distinct elements. Thus, the circular elements fail to accurately represent bulking that may occur in the final muck pile after the blast.

Some modeling systems employ straight-sided distinct elements such as quadrilateral elements or triangular elements to represent rock masses. A straight-sided distinct element is a series of lines connected to one another to form an outline of a shape with a set of angled corners. A system that uses straight-sided elements provides a more accurate simulation than a system that uses circular elements. For example, the straight-sided distinct elements can have aspect ratios unlike circular elements. However, detecting contact between straight-sided elements (e.g., contact between a corner of a first element and a side of a second element, contact between a corner of a first element and a side of a second element, and contact between a side of a first element and a side of a second element) is a very complex and computationally intensive process. Further, simulations using these types of distinct elements require orders of magnitude more computation time to complete than simulations employing spherical elements. Additionally, the straight-sided elements tend to be too stiff, bulk too much and not represent rock flow behavior very well.

Described herein are embodiments for simulating a blast using distinct elements with an advanced geometrical paradigm to represent blasted rock movement. Advanced distinct elements geometrically comprise arcs and lines that define the outline of the individual distinct element. Each line is connected via the arcs such that the lines do not intersect. Instead, the arcs and lines are used to create a two-dimensional distinct element with one or more straight sides and rounded corners. The rounded corners may be formed with one or more arcs. These advanced distinct elements improve the accuracy of a simulation when compared to the circular elements and are more computationally efficient than the straight-sided distinct elements.

While embodiments described herein relate to two-dimensional modeling, the embodiments may be expandable to three-dimensions where the inherent higher fidelity and computational efficiency will provide even greater advantage over the spherical and block element methods currently available. For example, an advanced distinct element in three-dimension may include a block with rounded corners.

It will be readily understood that the components of the embodiments as generally described below and illustrated in the Figures herein could be arranged and designed in a wide variety of different configurations. For instance, the steps of a method do not necessarily need to be executed in any specific order, or even sequentially, nor do the steps need to be executed only once. Thus, the following more detailed description of various embodiments, as described below and represented in the Figures, is not intended to limit the scope of the disclosure but is merely representative of various embodiments. While the various aspects of the embodiments are presented in the drawings, the drawings are not necessarily drawn to scale unless specifically indicated.

Embodiments and implementations of blast planning systems and methods described herein may include various steps, which may be embodied in machine-executable instructions to be executed by a computer system. A computer system may include one or more general-purpose or special-purpose computers (or other electronic devices). The computer system may include hardware components that include specific logic for performing the steps or may include a combination of hardware, software, and/or firmware.

Embodiments may be provided as a computer program product including a computer-readable medium having stored thereon instructions that may be used to program a computer system or other electronic device to perform the processes described herein. The computer-readable medium may include, but is not limited to: hard drives, floppy diskettes, optical disks, CD-ROMs, DVD-ROMs, ROMs, RAMs, EPROMs, EEPROMs, magnetic or optical cards, solid-state memory devices, or other types of media/computer-readable media suitable for storing electronic instructions.

Computer systems and the computers in a computer system may be connected via a network. Suitable networks for configuration and/or use as described herein include one or more local area networks, wide area networks, metropolitan area networks, and/or Internet or IP networks, such as the World Wide Web, a private Internet, a secure Internet, a value-added network, a virtual private network, an extranet, an intranet, or even stand-alone machines which communicate with other machines by physical transport of media. In particular, a suitable network may be formed from parts or entireties of two or more other networks, including networks using disparate hardware and network communication technologies.

One suitable network includes a server and several clients; other suitable networks may contain other combinations of servers, clients, and/or peer-to-peer nodes, and a given computer system may function both as a client and as a server. Each network includes at least two computers or computer systems, such as the server and/or clients. A computer system may include a workstation, laptop computer, disconnectable mobile computer, server, mainframe, cluster, so-called "network computer" or "thin client," tablet, smart phone, personal digital assistant or other hand-held computing device, "smart" consumer electronics device or appliance, medical device, or a combination thereof.

Suitable networks may include communications or networking software, such as the software available from Novell®, Microsoft®, and other vendors, and may operate using TCP/IP, SPX, IPX, and other protocols over twisted pair, coaxial, or optical fiber cables; telephone lines; radio waves; satellites; microwave relays; modulated AC power lines; physical media transfer; and/or other data transmission "wires" known to those of skill in the art. The network may encompass smaller networks and/or be connectable to other networks through a gateway or similar mechanism.

Each computer system includes one or more processors and/or memory; computer systems may also include various input devices and/or output devices. The processor may include a general-purpose device, such as an Intel®, AMID®, or other "off-the-shelf" microprocessor. The processor may include a special-purpose processing device, such as an ASIC, SoC, SiP, FPGA, PAL, PLA, FPLA, PLD, or other customized or programmable device. The memory may include static RAM, dynamic RAM, flash memory, one or more flip-flops, ROM, CD-ROM, disk, tape, magnetic, optical, or other computer storage medium. The input device(s) may include a keyboard, mouse, touch screen, light pen, tablet, microphone, sensor, or other hardware with accompanying firmware and/or software. The output device(s) may include a monitor or other display, printer, speech or text synthesizer, switch, signal line, or other hardware with accompanying firmware and/or software.

The computer systems may be capable of using a floppy drive, tape drive, optical drive, magneto-optical drive, or other means to read a storage medium. A suitable storage medium includes a magnetic, optical, or other computer-readable storage device having a specific physical configuration. Suitable storage devices include floppy disks, hard disks, tape, CD-ROMs, DVDs, PROMs, RAM, flash memory, and other computer system storage devices. The physical configuration represents data and instructions which cause the computer system to operate in a specific and predefined manner as described herein.

Suitable software to assist in implementing the invention is readily provided by those of skill in the pertinent art(s) using the teachings presented here and programming languages and tools, such as Modern Fortran, Java, Pascal, C++, C, PHP, .Net, database languages, APIs, SDKs, assembly, firmware, microcode, and/or other languages and tools. Suitable signal formats may be embodied in analog or digital form, with or without error detection and/or correction bits, packet headers, network addresses in a specific format, and/or other supporting data readily provided by those of skill in the pertinent art(s).

Aspects of certain embodiments may be implemented as software modules or components. As used herein, a software module or component may include any type of computer instruction or computer executable code located within or on a computer-readable storage medium. A software module may, for instance, comprise one or more physical or logical blocks of computer instructions, which may be organized as a routine, program, object, component, data structure, etc., that performs one or more tasks or implement particular abstract data types. A particular software module may comprise disparate instructions stored in different locations of a computer-readable storage medium, which together implement the described functionality of the module. Indeed, a module may comprise a single instruction or many instructions, and may be distributed over several different code segments, among different programs, and across several computer-readable storage media.

Some embodiments may be practiced in a distributed computing environment where tasks are performed by a remote processing device linked through a communications network. In a distributed computing environment, software modules may be located in local and/or remote computer-readable storage media. In addition, data being tied or rendered together in a database record may be resident in the same computer-readable storage medium, or across several computer-readable storage media, and may be linked together in fields of a record in a database across a network. According to one embodiment, a database management system (DBMS) allows users to interact with one or more databases and provides access to the data contained in the databases.

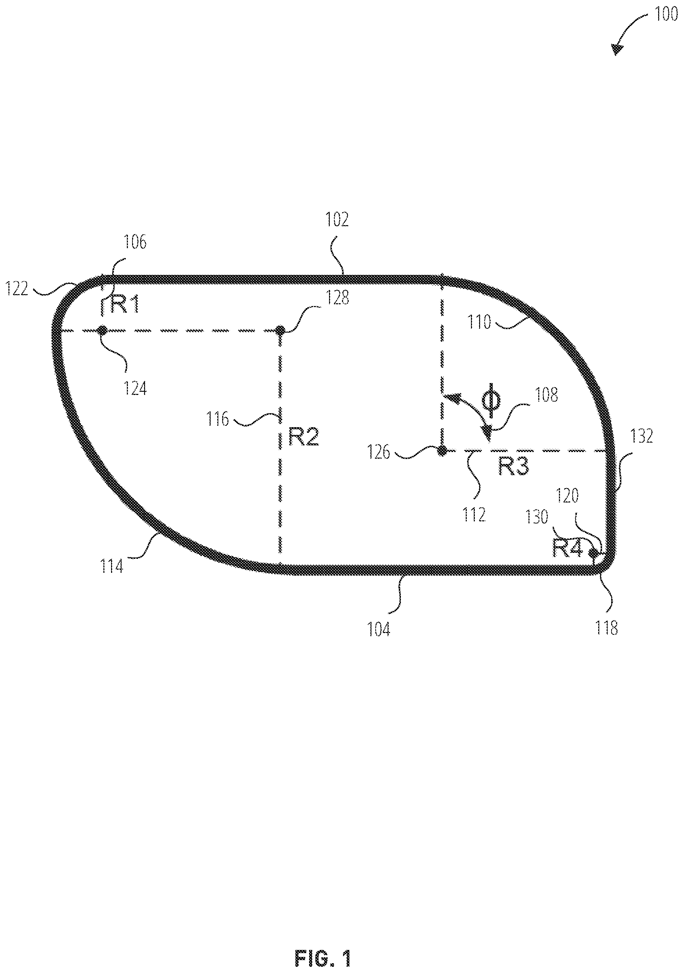

FIG. 1 illustrates an advanced distinct element 100 according to one embodiment, according to one embodiment. A distinct element modeling system segments using the advanced distinct element 100 segments a two-dimensional site model into a plurality of elements. The advanced distinct element 100 has a shape formed by connecting end points of one or more lines with arcs such that the end points of the two or more lines are indirectly coupled via the arcs and the arcs form rounded corners of the shape. The illustrated embodiment of the advanced distinct element 100 comprises a first line 102, a second line 104, and a third line 106 connected by four arcs (i.e., first arc 108, second arc 112, third arc 116, and fourth arc 122).

The illustrated embodiment includes two parallel lines. Other embodiments may feature one or more lines and the lines may be at an angle relative to one another. Each line comprises two end points each end point is connected to an arc such that the shape features rounded corners or edges. Each rounded corner may be created using one or more arcs. For example, one rounded corner or rounded edge is created by connecting the first arc 108 and the second arc 112.

Each arc is a differentiable curve. In the illustrated embodiment, the arcs are circular arcs that outline a part of a circumference of a circle. The illustrated embodiment includes four arcs. Other embodiments may include a different number of arcs. Each arc comprises an arc center point (i.e. first center point 126, second center point 128, third center point 130, and fourth center point 132). The arc center points represent a point equidistant from all points on the circular arc. Each arc further comprises a radius (i.e., first radius 110, second radius 114, third radius 118, and fourth radius 124). Because the arcs are circular, the radius for each arc is the same along all points of the arc. Additionally, each arc comprises an arc angles (e.g., third arc angle 120). The arc angle is the angle formed by the arc at the center point. As illustrated, end points of the arcs may connect to either another arc as shown by the connection between first arc 108 and the second arc 112, or the endpoints of the arcs may be connected to lines as shown by the connections between the first line 102 and the third arc 116.

The intersections between arcs and lines and the intersections between arcs and arcs form smooth transitions between the different shape outline elements. Each line may be tangential to the end point of the arc to which it is connected to smooth the transition. Similarly arc-to-arc transitions may smoothly transition. The intersections do not form sharp angles such as is formed when two straight lines directly connect and form a vertex. The resulting shape features an outline with rounded corners rather than a shape with angled corners. Thus, the lines of advanced distinct element 100 are not directly connected, but rather indirectly coupled via the arcs, to prevent the angled corners. The rounded corners are more computationally efficient than sharp angled corners and may be created using one or more arcs.

The advanced distinct element 100 is created from arcs and lines that define the outline of the individual distinct element. FIG. 1 illustrates one of the many possible element shapes that can be created from arcs and lines. Other embodiments of an advanced distinct element may use arcs and lines to create other non-spherical shapes without angled corners. Other shapes that may be created using a combination of arcs and lines include polygons with rounded corners such as a triangle with rounded corners, a trapezoid with rounded corners, a rectangle with rounded corners, a square with rounded corners, a hexagon with rounded corners, or an octagon with rounded corners.

In some embodiments, the shape used for elements of a simulation model may be based on geologic data such as rock hardness. In some embodiments, a simulation model at least some of the elements are different shapes. For example, different types of rock may be modeled using different shapes of elements. For instance, coal may be modeled with a rounded quadrilateral and another rock in the same simulation may be modeled with a rounded hexahedron. In some embodiments, at least some of the elements of a same shape are different sizes.

The distinct element shapes formed with non-continuous lines indirectly coupled via arcs provide better accuracy than circular elements and provide a computational efficiency advantage over distinct elements with only straight lines. The straight lines and varying arc radiuses provide a more realistic aspect ratio when compared with circles, while the arcs provide a more efficient way to detect contacts between neighboring elements when compared to elements with only straight lines.

Each advanced distinct element 100 in a blast simulation model may be stored in memory of a modeling system. For example, the advanced distinct element 100 may be a data structure comprising line endpoint node coordinates, designated arc end points, arc center points, arc radiuses, and arc angles.

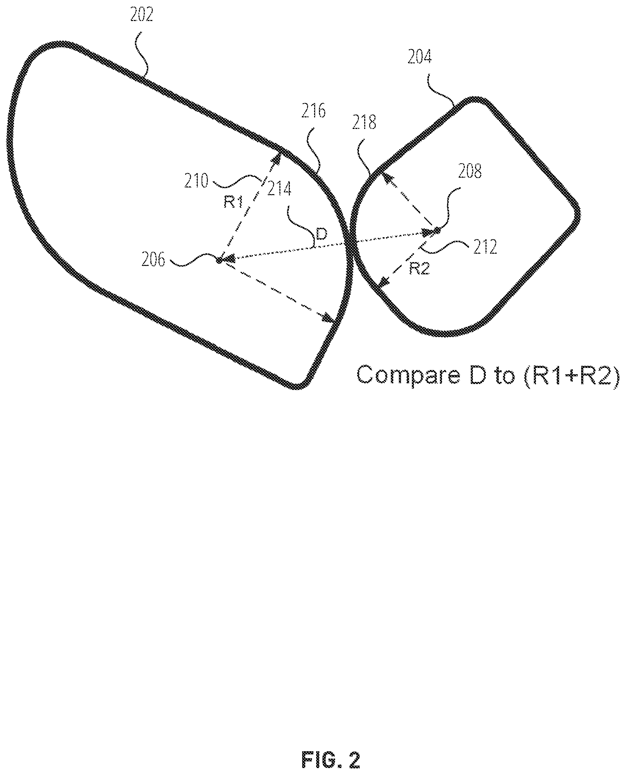

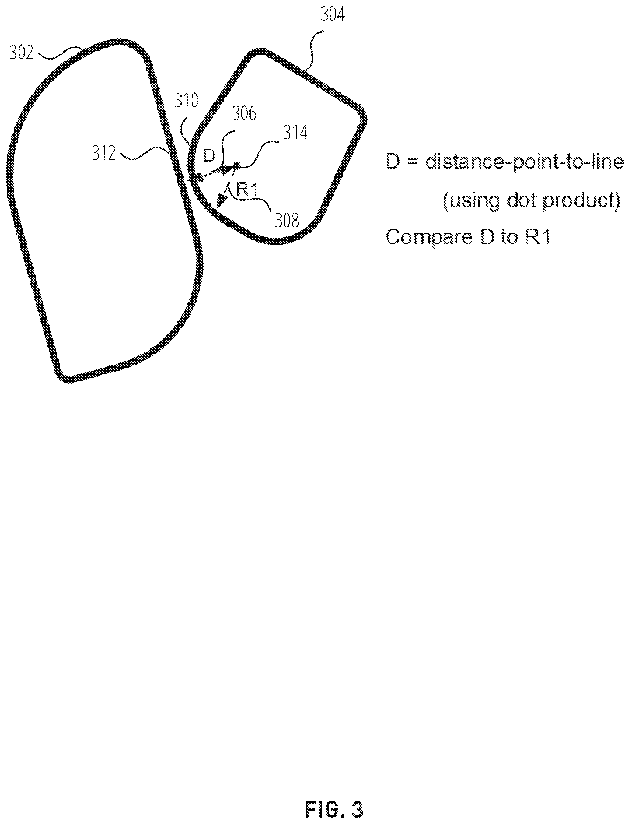

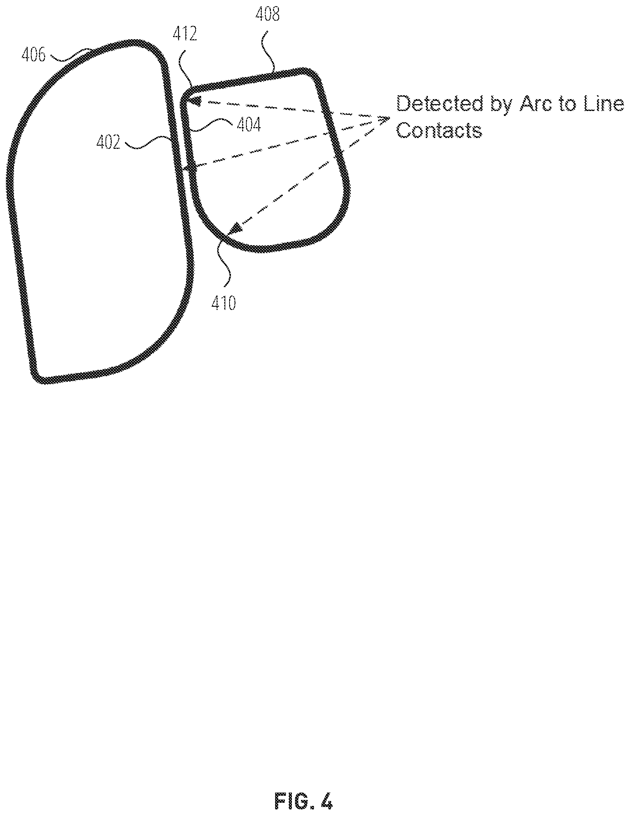

FIGS. 2-4 illustrate various ways to detect contact between advanced distinct elements. Two key inter-element interaction mechanisms for detecting contact between neighboring elements are 1) arc-to-arc as illustrated in FIG. 2, and arc-to-line as illustrated in FIG. 3. Another possible interaction mechanism is line-to-line as illustrated in FIG. 4. However, as discussed in more detail below, the line-to-line contact may be detected by the arc-to-line interaction mechanisms.

Detecting these element interactions between the advanced distinct elements are all very computationally efficient, much more so than interactions between straight sided distinct elements. The advanced distinct elements also have aspect ratio greater than one with more natural bulking and interparticle friction than circular elements.

The described advanced distinct elements will enable a simulation to increase fidelity in distinct element modeling of rock blasting because the elements have an aspect ratio that circular elements do not have and will naturally exhibit more of the natural behavior or rocks during blasting induced movement such as bulking, and inter-element friction.

Also, due to the computational simplicity and speed of arc-to-arc and arc- to-line contact detection and resolution, higher fidelity simulations can be completed with substantially less computation time. This implies that significantly more realistic blasting simulations can be accomplished on less expensive and more portable laptop computers.

FIG. 2 illustrates an arc-to-arc contact detection technique that may be used by a modeling system to determine contact between arcs of neighboring elements. As shown, a first element 202 with a first arc 216 is neighboring a second element 204 with a second arc 218.

To detect if the arcs of these two elements contact each other during a timestep of a simulation, a modeling system may determine if there is an overlap between the first arc 216 and the second arc 218. Such overlapping arcs may be referred to as arc-to-arc contact. Detecting arc-to-arc contact between the neighboring elements comprises comparing a distance 214 between arc center points (i.e., first center point 206 and second center point 208) of the first arc 216 and the second arc 218 of the neighboring elements to a sum of a first radius 210 and a second radius 212 of the two arcs of the neighboring elements. For example, in some embodiments, arc-to-arc contact is detected when the sum of the radiuses is greater than the distance 214.

FIG. 3 illustrates an arc-to-line contact detection technique that may be used by a modeling system to determine contact between an arc 310 and a line 312 of neighboring elements. In this figure, the first element 302 and the second element 304 are neighboring elements where the nearest points along the perimeters of the elements are the arc 310 of the second element 304 and the line 312 of the first element 302. R1 represents the radius 308 of the arc 310 and D represents a shortest distance 306 between an arc center point 314 and the line 312. A modeling system may determine the distance 306 using the dot product.

When the arc 310 and a line 312 overlap in the simulation it is referred to as arc-to-line contact. A modeling system may detect arc-to-line contact between the neighboring elements by comparing a radius 308 of the arc 310 to a distance 306 between the line 312 of a first element 302 and an arc center point 314 of the arc 310 of the second element 304. For example, contact may be detected when the radius 308 is greater than the distance 306.

FIG. 4 illustrates how a line-to-line contact may be detected by a modeling system using the arc-to-line contact technique described with reference to FIG. 3. Line-to-line contact occurs when a first line 402 of a first element 406 overlaps with a second line 404 of a second element 408. Direct line-to-line contact detection is computationally less efficient than arc-to-arc contact detection and arc-to line contact detection. Therefore, in some embodiments, line-to-line contact may be detected indirectly using the arc-to-line contact detection technique because when the lines overlap, one or both of the first arc 410 and the second arc 412 will overlap the first line 402.

Thus, to determine the neighboring element contact a modeling system may the use arc-to-line contact technique described with reference to FIG. 3 on one or both of the first arc 410 and the second arc 412. For example, the system may compare a radius of the first arc 410 to a distance between the first line 402 and a center point of the first arc 410 and compare a radius of the second arc 412 to a distance between the first line 402 and a center point of the second arc 412

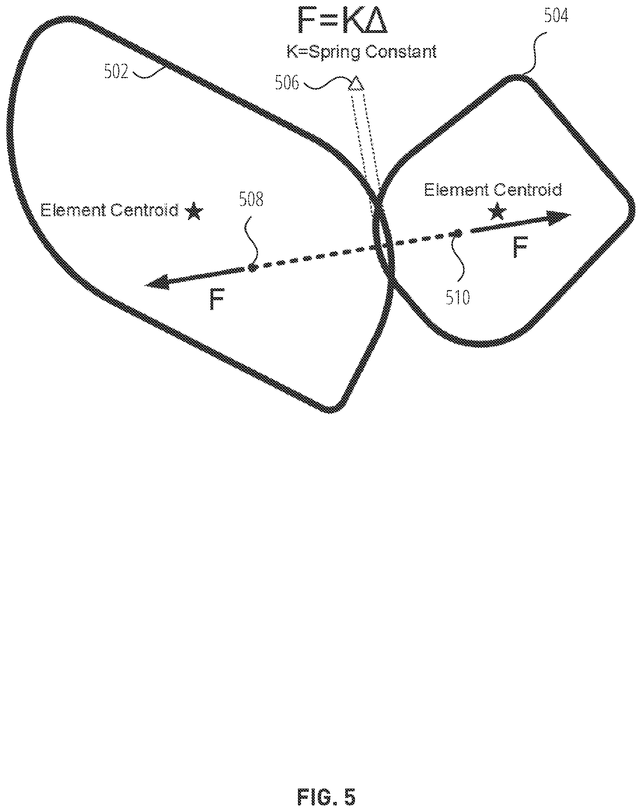

FIG. 5 illustrates a force calculation that a modeling system may use to determine a force applied to an advanced distinct element by contacting elements. The modeling system may calculate the magnitude and direction of the forces applied to each element. The system detects contact between the first element 502 and the second element 504 when there is an overlap 506 of the perimeters of the two distinct elements during a timestep of a simulation. The modeling system resolves or eliminates the overlap by applying restoring forces that are calculated to eliminate the overlap 506.

These restoring forces are applied to both the first element 502 and the second element 504.

As part of a simulation, a modeling system may determine contact and calculate a force to apply to each element by a contacting neighbor element. The force is calculated based on the overlap 506 caused by the contact. For arc-to- arc contact, the force is applied through the arc center points (i.e. , first arc center point 508 and second arc center point 510) for arc-to-arc contact. For arc-to-line contact, the force is applied perpendicular to the line and through a center of the arc. The magnitude of this restorative force is equal to the specified spring constant of the material multiplied by the overlap 506.

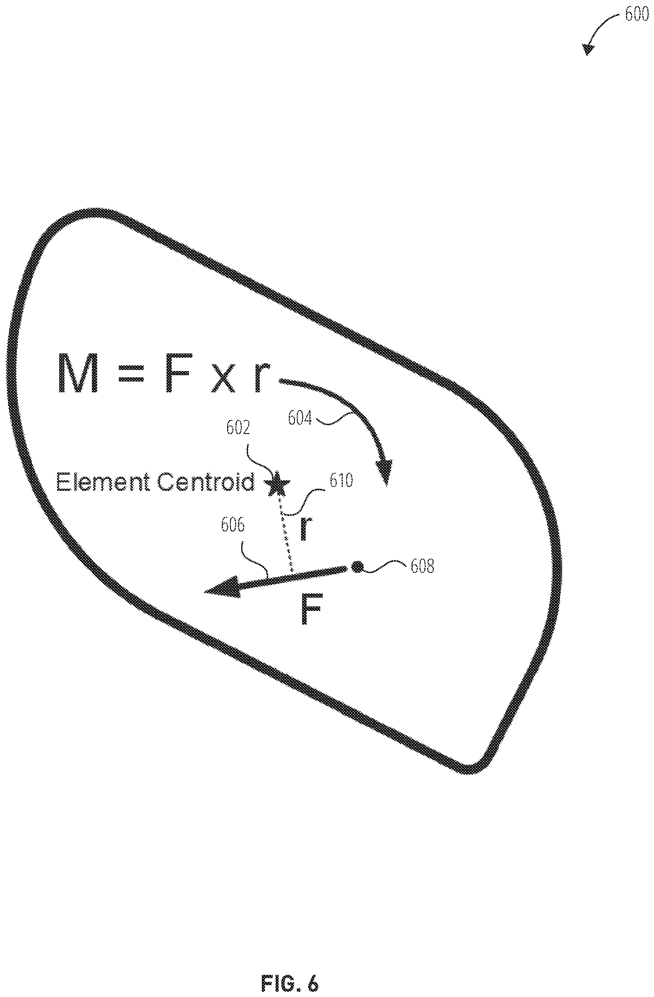

FIG. 6 illustrates a moment calculation that a modeling system may use to determine a moment 604 applied to the advanced distinct element 600 by contacting elements. Each force 606 applied to the advanced distinct element 600 will also produce a moment 604, M, on the advanced distinct element 600 as illustrated. Moments are applied to the element center 602 by all of the forces applied to the advanced distinct element 600 including the force 606 applied to the arc center point 608 caused by contacting elements. In some embodiments, the modeling system calculates a moment for each force separately and then sums the moments to determine a total moment for the advanced distinct element 600.

A modeling system may calculate the moment 604 by calculating:

$$M = F \times r$$

where:

F is the force 606; and

r 610 is the shortest distance between a vector representing the force 606 and the element center 602.

The total moment (i.e., the sum of the moments) is calculated to determine the rotation of the advanced distinct element 600.

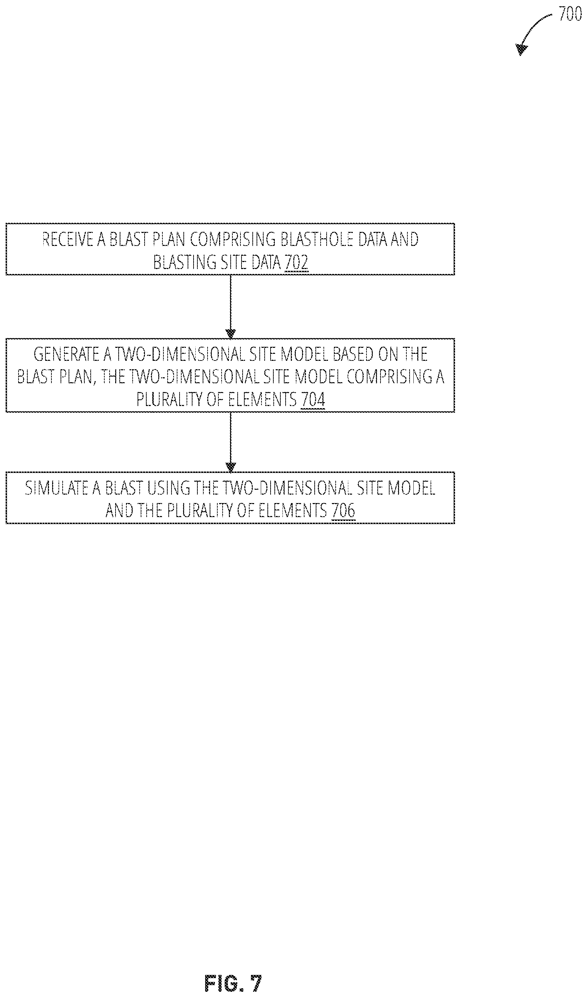

FIG. 7 illustrates a flowchart of a method 700 for explosive blast modeling according to one embodiment. A modeling system executing the method 700 receives 702 receives a blast plan comprising blasthole data and blasting site data. Blasthole data may include blasthole parameters such as blasthole spacing, blasthole burden, blasthole depth, blasthole diameter, blasthole pattern, the number of blastholes, stemming information, explosive properties, blasthole angle, top coordinates of the blasthole, bottom coordinates of the blasthole, and decking information. Blast patterns may be geometrically defined in a 3D coordinate system, X (longitude), Y (latitude) and Z (vertical). The 3D coordinate system may be local with an origin somewhere close to the blast pattern, or, may be in the coordinate system of the mine, which is typically a larger 3D local coordinate system that encompasses all of the mine. In a blast pattern design a line representing the blasthole may be defined by the top and bottom coordinates. Most blast patterns do not have a flat top surface is rarely and angles of each blasthole in the pattern can be slightly or substantially different. Thus, the top and bottom coordinates may be used to define the blastholes.

Blasting site data may include bench information, geological properties, geologic characteristics, and geologic factors of a site. Non-limiting examples of bench information includes face angle, bench height, bench dip, pit dip, spoil angle, and a number of face elements. Non-limiting examples of geological properties include mineralogy (elemental and/or mineral), lithologic structure (primary, secondary, and/or texture), porosity, hardness, attenuation, Young's Modulus, Shear Modulus, Bulk Modulus, Poisson Ratio, P wave velocity, S wave velocity, rock density, rock type, rock strength, rock conditions, rock description, joint condition, joint angle, joint orientation, standard deviation of joint spacing, cohesion, vertical joint spacing, horizontal joint spacing, unconfined compressive strength (UCS), sonic velocity, standard deviation of drilling, shock velocity, fracture toughness of rock, reflectivity of rock, tensile strength of rock, internal friction angle, Hugoniot data (e.g., Up min, Up max, Us min, Us max), and ground stresses ($\sigma 1$, $\sigma 2$, $\sigma 3$, stress orientation, dip, direction, and roll). "Texture" refers to the size, shape, and arrangement of the interlocking mineral crystals which form a rock or other material. The geology data may be used to determine further geologic characteristics, such as friability and fragmentability.

The modeling system generates 704 a site model (e.g., a two a two-dimensional site model) based on the blast plan by generating a plurality of advanced distinct elements. Each advanced distinct element has a shape formed by connecting endpoints of one or more lines with arcs such that the endpoints of the one or more lines are indirectly coupled via the arcs and the arcs form rounded corners of the shape. The modeling system further simulates 706 a blast using the site model and the plurality of elements.

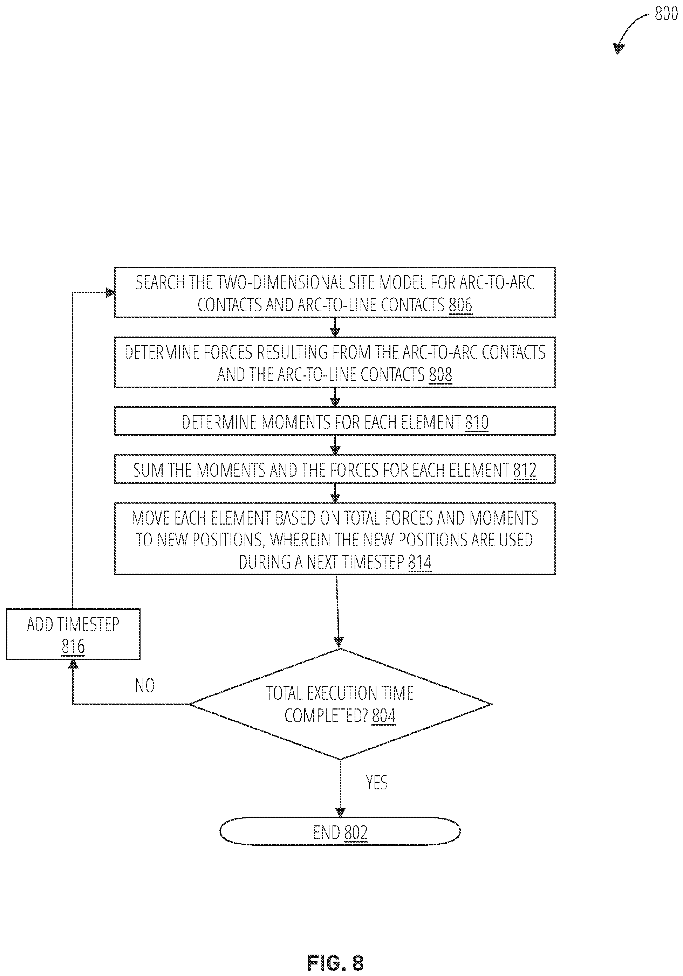

FIG. 8 illustrates a flowchart of a method 800 for simulating a blast using according to one embodiment. A distinct element simulation method tracks the movement and interactions of many thousands of distinct elements by marching through time at a precalculated stable timestep, typically 1.0E-4s or smaller, depending on the mass and stiffness of the individual elements. At each timestep the following method steps are used.

A system using the method 800 searches 806 the entire assemblage of distinct elements in a site model for arc-to-arc contacts and arc-to-line contacts using the techniques described with reference to FIGS. 2-4. The system may further determine 808 forces resulting from the arc-to-arc contacts and the arc-to-line contacts using the techniques described with reference to FIG. 5. The system can also determine 810 moments for each element using the techniques described with reference to FIG. 6.

The system using the method 800 sums 812 the moments and the forces for each element. At each timestep each element can have multiple restorative forces and moments applied to it resulting from multiple contacts with surrounding elements. The multiple forces and moments are summed to calculate a total force and a total moment.

The system implanting method 800 moves 814 each element based on total forces and moments to new positions. The new positions are used during a next timestep. Contact between elements results in an overlap. This overlap is resolved or eliminated by applying reacting forces and moments to each of the elements. The system applies the total force and total moment to each element to translate and rotate each element a small distance to a new location at the end of the small timestep.

The system using the method 800 then determines 804 if a total execution time for the simulation has been completed. If the time duration for the simulation is finished, the method 800 ends 802. Otherwise, the method 800 adds 816 a timestep to the to a current time period and executes the simulation again with the new positions of the distinct elements.

In some embodiments, the method 800 may include additional steps. For example, when two arcs are going across, they do not generate much fiction. Accordingly, part of the method 800 may include placing temporary bonds to simulate the friction caused by rough rocks. This enhanced frictional behavior may change based on rock type.

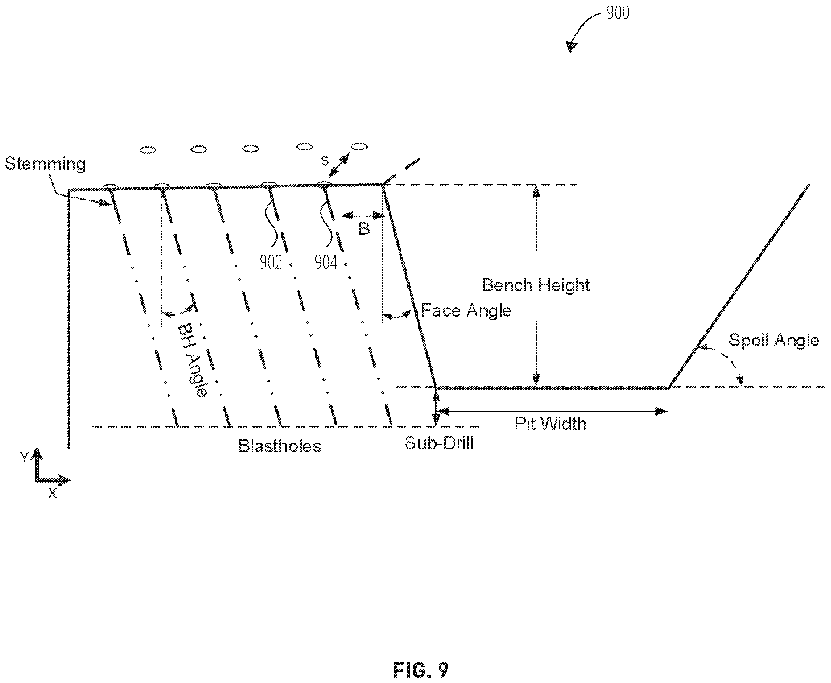

FIGS. 9-20 illustrate various procedures that a modeling system may perform to simulate a blast. Any of these procedures may be used in combination with the methods described in FIG. 7 and FIG. 8.

FIG. 9 illustrates parameters 900 of an input file that a modeling system may receive. The input file is used by the modeling system to create a model for blast simulation. The illustrated model is a free-face two-dimensional model. The model includes a plurality of blastholes (e.g., blasthole 902 and blasthole 904) shown in the two-dimensional XY plane. The model including the location, size, and angle of the blastholes are defined by the input file.

The input file may be a blast plan comprising blasthole data and blasting site data. Blatsthole data may comprise the number of rows, the burden, spacing, stemming information, decking information, explosive properties, blasthole diameter, blasthole angle, top coordinates, and bottom coordinates. Blasting site data may comprise bench information such as face angle, bench height, bench dip, pit dip, spoil angle, and number of face elements.

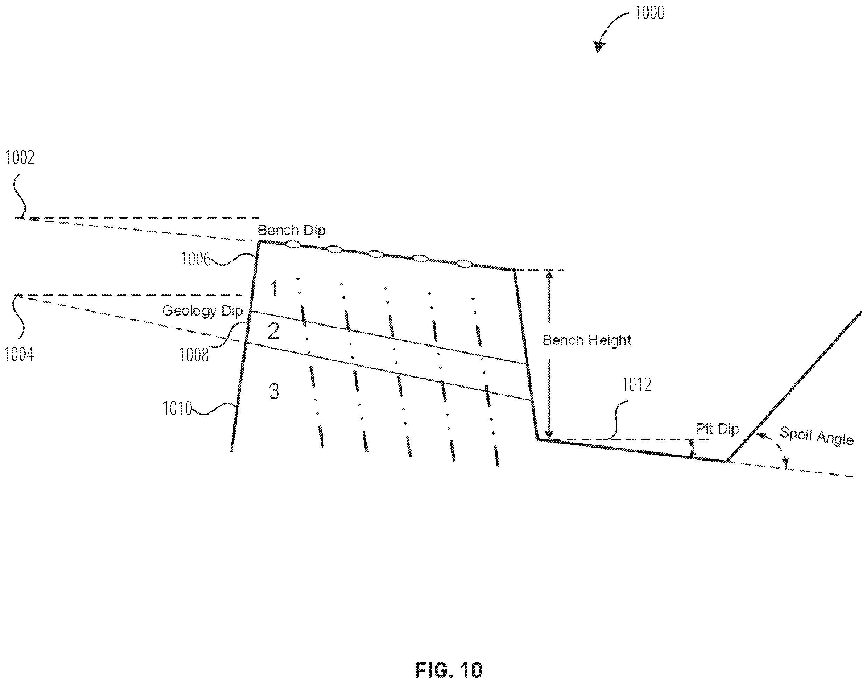

FIG. 10 illustrates geology input data 1000 that the modeling system may receive. The geology input data 1000 may be included in the blasting site data of the input file that a modeling system receives. The geology input data includes geological properties, geologic characteristics, and geologic factors of a site.

For example, the geology input data 1000 may include the bench dip 1002, pit dip 1012, and geology dip 1004. The bench dip 1002 represents the slope of the plateau of the bench. The pit dip 1012 represents the slope of the pit. The geology dip 1004 represents the slope of the geologic layers of the bench. In some embodiments, the angles of the of the bench dip 1002, pit dip 1012, and geology dip 1004 may be different from one another. In some embodiments, two or all three of the bench dip 1002, pit dip 1012, and geology dip 1004 may have the same angle. For example, the bench dip and the geology dip 1004 may have the same angle. The

Additionally, the geology input data may include properties of the geologic layers (e.g., first layer 1006, second layer 1004, and third layer 1010 of the bench. The properties of the geologic layers may include rock type, density, Young's modulus, Poisson's ratio, rock shock velocity, and crack velocity factor for each layer. These properties may be used to determine shape, size, and/or radius of the arcs of the distinct elements used to model the geologic layers.

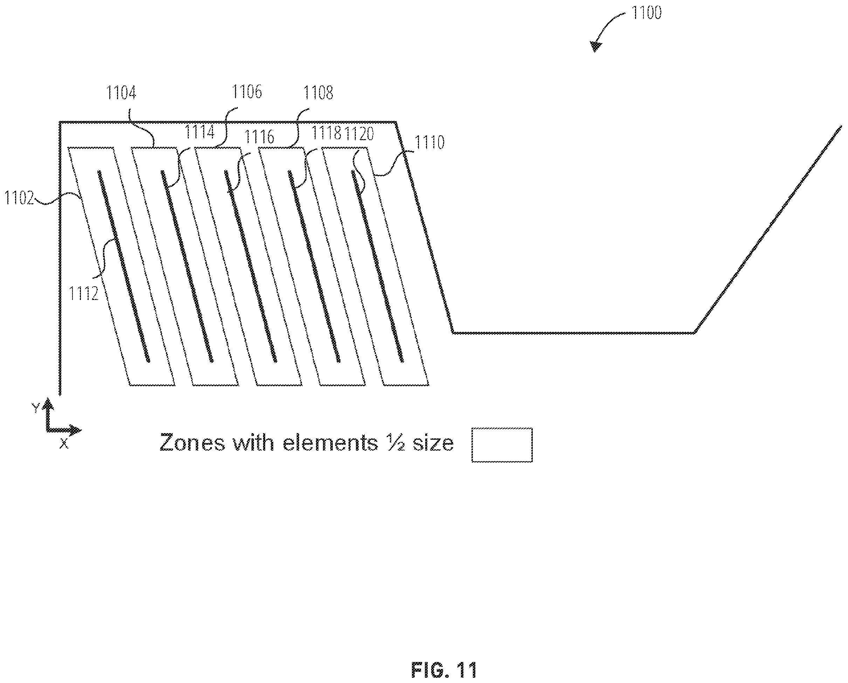

FIG. 11 illustrates a blast model 1100 divided into a plurality of zones (i.e. , zones 1102-1110 referred to herein as zones) based on blasthole locations. A modeling system may identify the zones to represent regions where a different size element will be used for the simulation.

The different size elements may be used to represent different fragmentation sizes. The modeling system may use a smaller element within the zones to represent that the rocks nearest the blastholes 1112-1120 will be broken up into smaller pieces due to their position relative to the explosive force. Additionally, in some embodiments, these zones may be defined based on the location of the explosives in the blastholes 1112-1120 disregarding portions such as stemming.

In some embodiments, the rocks in the zones will be represented by elements that are a proportion of the size of the remainder of the bench. For example, in the illustrated embodiment, the elements in the zones are half of the size of the other elements in the model. In other embodiments, the elements in the zones may be different proportions based on the energy density, the type, and/or amount of explosives in a blasthole associated with the zone. For example, a first zone may be segmented into half size elements while a second zone may be segmented into quarter elements.

In some embodiments, the size of the elements may be gradated based on relative position to the explosives in blastholes rather than two sizes. In these embodiments, the zones may or may not be used. A gradient of element sizes would result in the smallest elements near the explosives of the blasthole with the elements gradually increasing in size based on distance from the explosives of the blasthole.

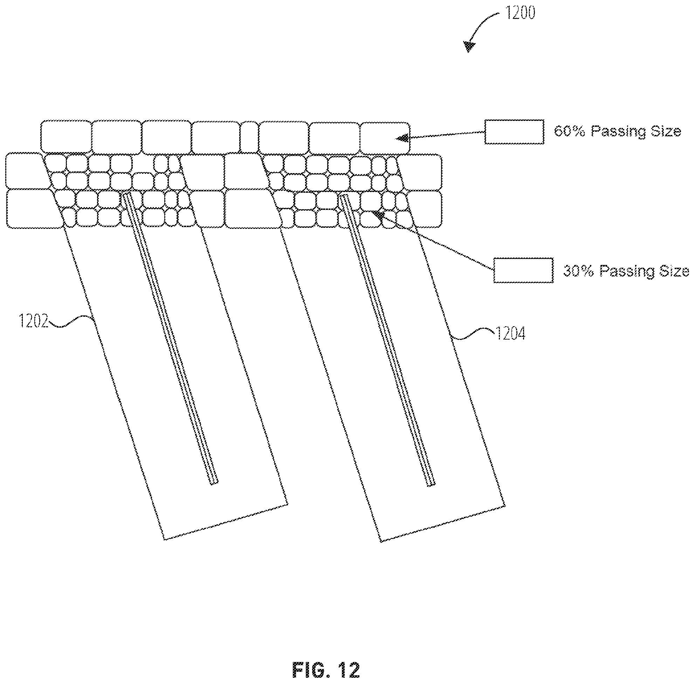

FIG. 12 illustrates a blast model 1200 partially fragmented. As shown, the modeling system fragments the blast model 1200 by segmenting or forming a mesh of elements to represent the rocks of the model. The elements in the illustrated embodiment are quadrilateral elements with rounded corners. A similar fragmentation may be done using other non-spherical shaped elements without sharp corners.

In the illustrated embodiment, the modeling system predicts that the area of the blast model 1200 outside the first zone 1202 and the second zone 1204 will fracture at a size that is 60% of the desired passing size. The larger elements at the bench face may be truncated to align with the bench face.

The modeling system uses smaller elements in the first zone 1202 and the second zone 1204 to represent a greater fragmentation near the explosives within the blasthole. In the illustrated embodiment, the smaller elements are 30% of the desired passing size which is half the size of the larger elements. The elements that cross the blasthole may be split and represented as two elements.

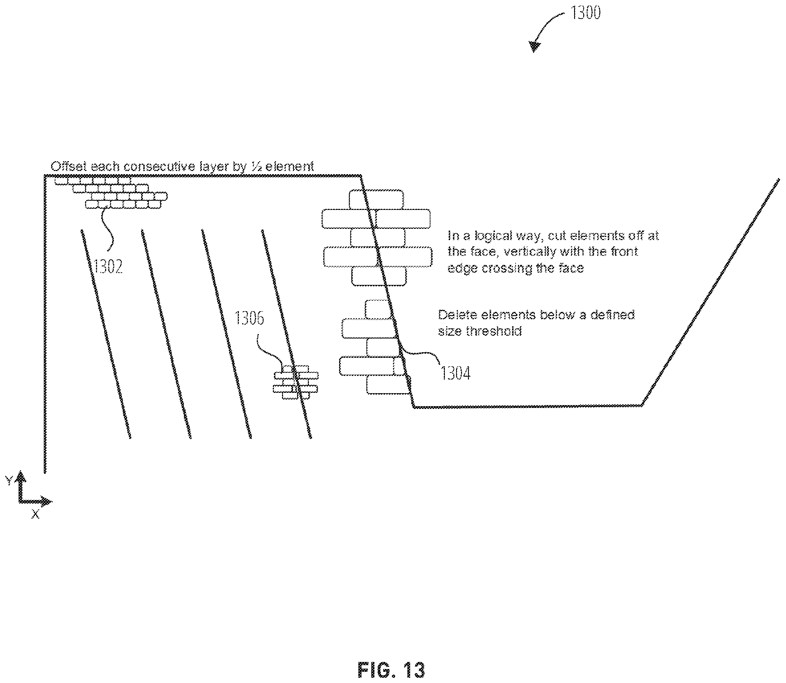

FIG. 13 illustrates a blast model 1300 partially fragmented into a plurality of elements using a variety of fragmentation techniques. The elements used in the illustrated embodiment represent one type of advanced distinct element, namely a rounded corner quadrilateral element.

In a first area 1302, a modeling system has segmented the top of the bench into four layers. As shown, each layer in the first area 1302 as well as the second area 1306 and the third area 1304 are offset. For example, in some embodiments, each consecutive layer may be offset by half of an element.

The second area 1306 represents how the modeling system segments the blast model 1300 near a blasthole. The modeling system may identify elements that cross the blasthole, and truncate such elements to fit the elements around the blasthole. In the illustrated embodiment, these elements at the blasthole are terminated or cut off at the blasthole with a vertical edge. However, in other embodiments, the elements may be cut at the same angle as the blasthole. Additionally, in some embodiments, if a truncated element is less a threshold size or width, the modeling system may simply delete the element.

The third area 1304 represents how the modeling system segments the blast model 1300 near the face of the bench. The modeling system may identify elements that cross the face of the bench and truncate such elements to fit the elements within the bench. In the illustrated embodiment, these elements at the bench face are terminated or cut off at the bench face with a vertical edge. However, in other embodiments, the elements may be cut at the same angle as the bench face. Additionally, in some embodiments, if a truncated element is less a threshold size or width, the modeling system may simply delete the element.

The modeling system may fragment the remainder of the blast model 1300 according to the techniques described above.

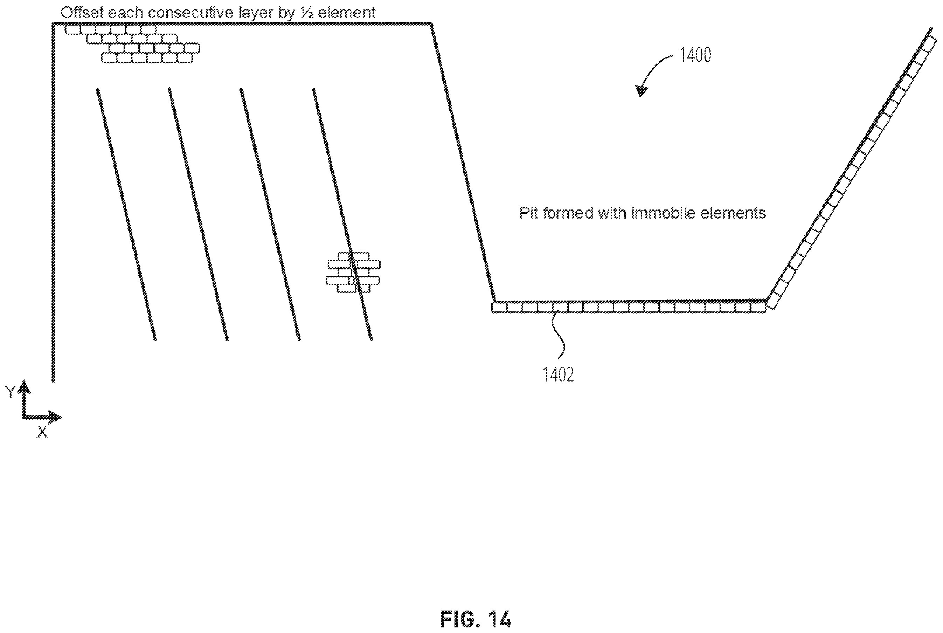

FIG. 14 illustrates how the modeling system may create a blast pit 1400. The blast pit 1400 may be formed using immobile elements 1402. The immobile elements 1402 will not move during simulation. The immobile elements 1402 may also use elements formed using arcs and lines. For example, the immobile elements 1402 may have the same shape as the same elements used to model the bench. Accordingly, the interactions between the immobile elements 1402 and blast moved elements may be determined by the modeling system using arc-to-arc contact and arc-to- line contact.

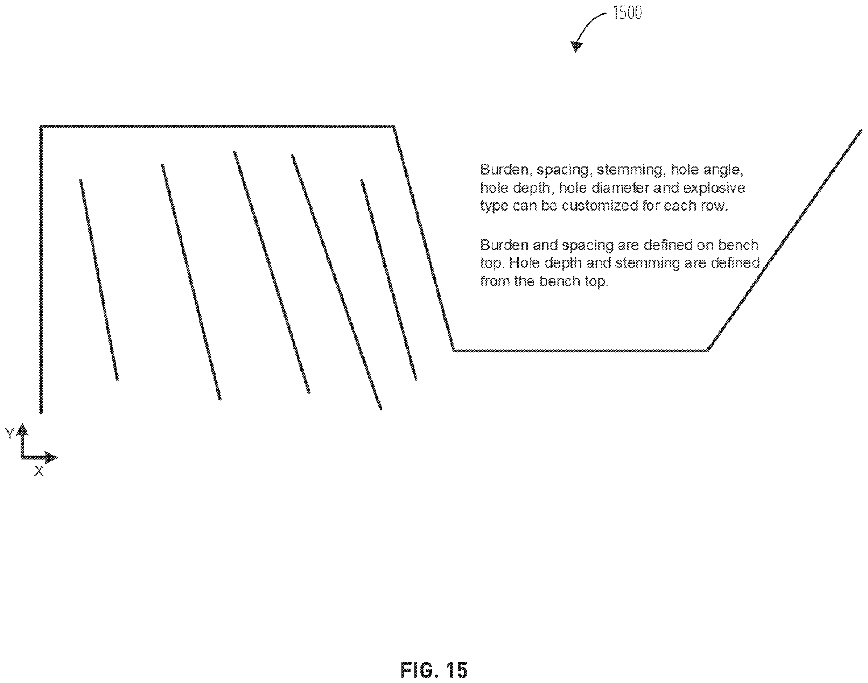

FIG. 15 illustrates a blast model 1500 with blastholes with different parameters. In a blast design, parameters can vary across the blast site. For example, blast design parameters can vary on each row. Some parameters that may be varied within a blast plan include burden, spacing, stemming, hole angle, hole depth, hole diameter and explosive type can be customized for each row. Burden and spacing are defined for the position of the blastholes on a bench top, whereas hole depth and stemming are defined from the bench top (e.g., distance from the bench top). A modeling system as described herein can generate and perform blast simulation on a custom model that varies the blast design parameters.

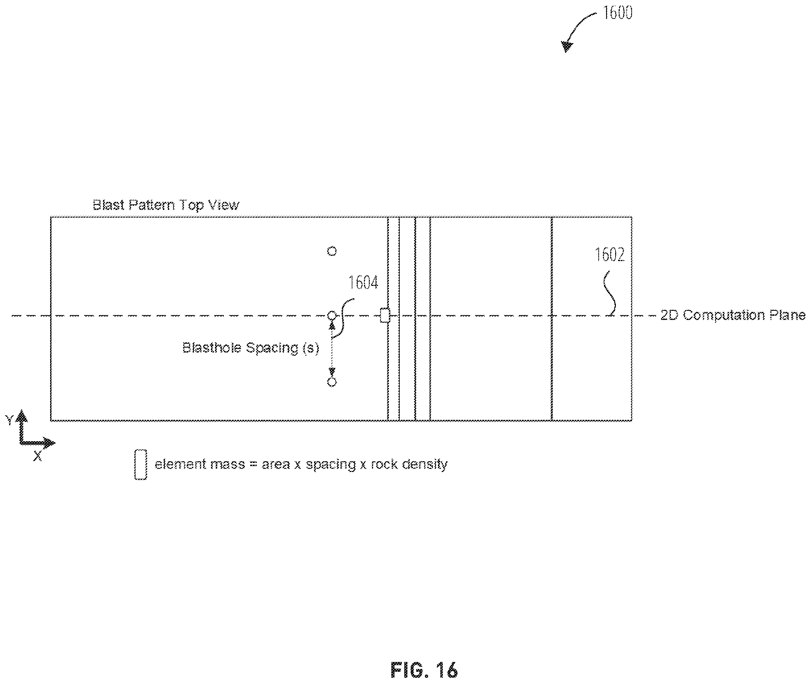

FIG. 16 illustrates a top view of a blast pattern 1600. The two-dimensional computation plane 1602 is a two-dimensional distinct element blast model (e.g., the models illustrated in FIGS. 9-15) where the blast simulation occurs. The modeling system may use the blast pattern 1600 to take into account the three-dimensional aspects of the bench.

For example, the modeling system may account for the three-dimensional aspects of the bench by determining the mass of the elements based on the spacing 1604. By accounting for the spacing 1604, the modeling system determines a true mass moved by each blasthole and assigns that mass to the elements that are in two-dimensional computation plane 1602.

Accordingly, elements displacement of the simulation will be a function of spacing. Additionally, increasing element mass may make a time-step of a simulation larger.

The element mass may be calculated as:

$$\text{element mass} = \text{area} \times \text{spacing} \times \text{rock density}$$

where:

the area is the elements area in the two-dimensional computation plane 1602;

the spacing is the distance between blastholes in a row; and

the rock density is the density of the geologic material represented by the element.

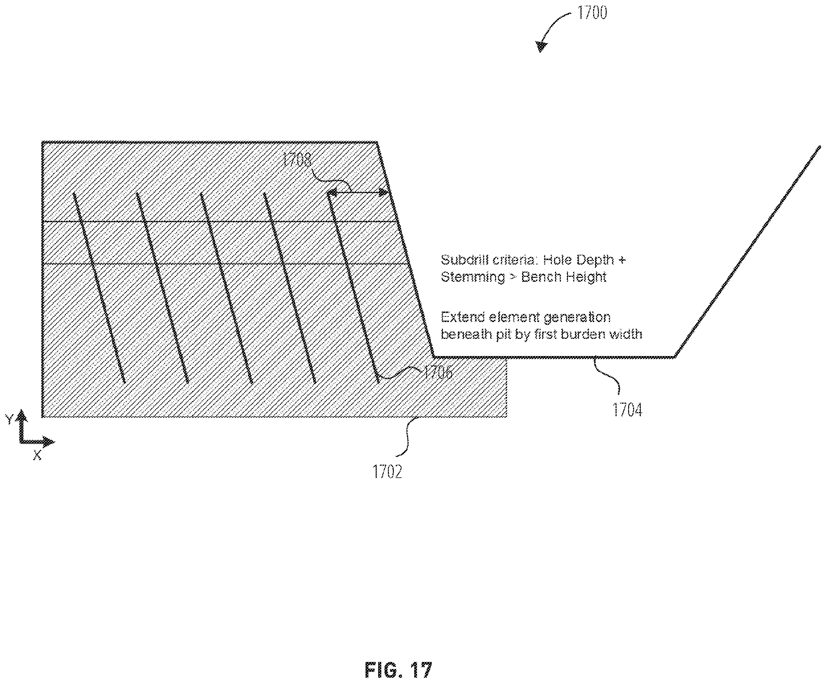

FIG. 17 illustrates a blast model 1700 with subdrilled blastholes (e.g., blasthole 1706). A subdrill occurs when a blasthole is drilled below a bottom of a pit 1704. In other words, the blasthole depth plus the stemming is greater than the bench height.

To simulate a blast with subdrilled holes, some embodiments of the modeling system may extend the mobile element area 1702 to beneath the pit 1704. For example, the distinct elements that are moved during a blast simulation may be extended beyond the bench face by a length of the first burden width 1708. The first burden width 1708 is the space between the first blasthole row and face. When the modeling system simulates a blast, the entire mobile element area 1702 is used as the computational area where the system determines movement of the elements. Thus, the subdrill extends the computational area out underneath the pit 1704. In some embodiments, the modeling system may simulate inter-row time delays using the elements. For example, the modeling system may simulate a series of time delayed planes that feed data into the position of the elements and the time of initiating the second row. For instance, FIG. 16 illustrates a volume of rock moved by an individual blasthole. The (out-of-plane) spacing between blastholes may control the mass of rock moved by the blasthole and ultimately the velocity of GEM elements influenced by that blasthole.

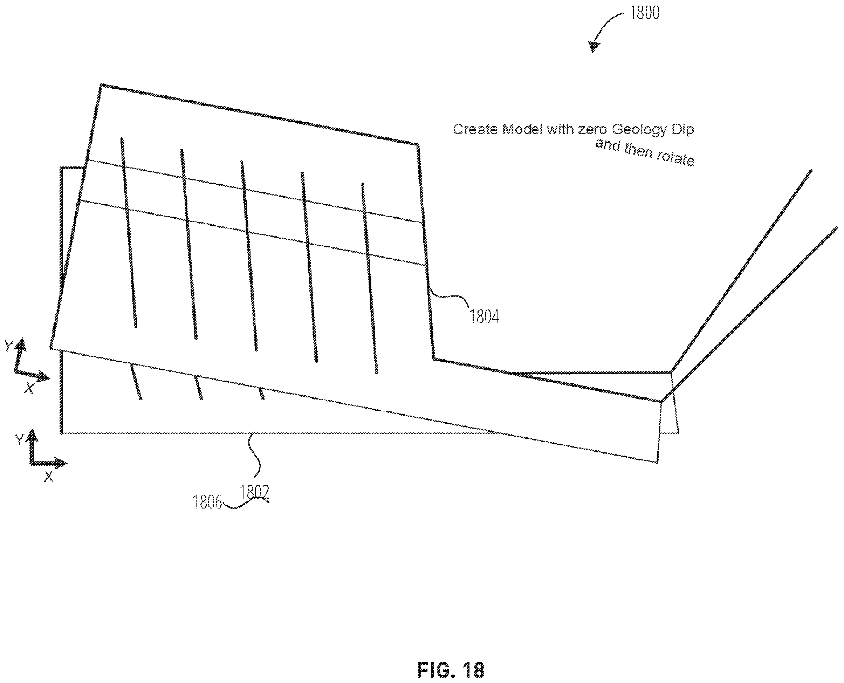

FIG. 18 illustrates a rotation procedure that the modeling system may employ to create a geology dip for a blast model 1800. In some embodiments, the modeling system creates a model 1800 that has zero geology dip. The system may then rotate the model 1800 from a horizontal position 1802 to an angled position 1804. The system may rotate the model 1800 such that the model 1800 at the angled position 1804 may have an angle consistent with the geology dip.

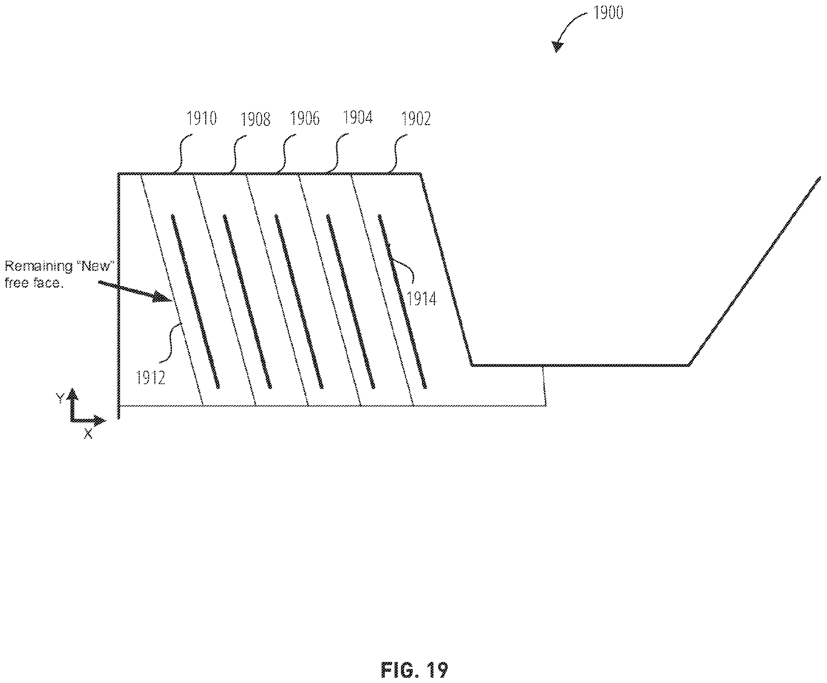

FIG. 19 illustrates a procedure for timing of burden release of distinct modeling elements in the blast model 1900. As shown, a modeling system may divide up the blast model 1900 into multiple detonating portions (e.g., first detonating portion 1902, second detonating portion 1904, third detonating portion 1906, fourth detonating portion 1908, fifth detonating portion 1910). Before the explosives in the blastholes are detonated, the distinct elements are not yet released. In other words, the distinct elements are frozen from movement.

A burden release for distinct elements in a detonating portion occurs when the simulation detonates explosives in a blasthole that is located in the detonating portion. The burden release allows the distinct elements to begin moving. Simulations may include a time delay between detonation of blasthole rows for each row may be delayed. During initialization of a simulation, a modeling system may set the burden release or "alive time" for each element, based on the row delay time.

Each detonating portion may include elements that are located one-third of the burden behind each row of blastholes and elements in front of the blastholes. Thus, when each detonating portion reaches a time for a burden release, one-third of the burden behind the blasthole is fragmented and free to move along with the burden fragmented and free ahead of the blasthole.

The modeling system advances the simulation through time at a stable time step. When the detonation time for a row is reached, the modeling system releases elements in the burden in front of the row plus 1/3 of the burden behind is released to move because the "alive time" for all of those elements has been reached. The modeling system will sequentially release the elements of each detonating portion until the new free face 1912 is reached.

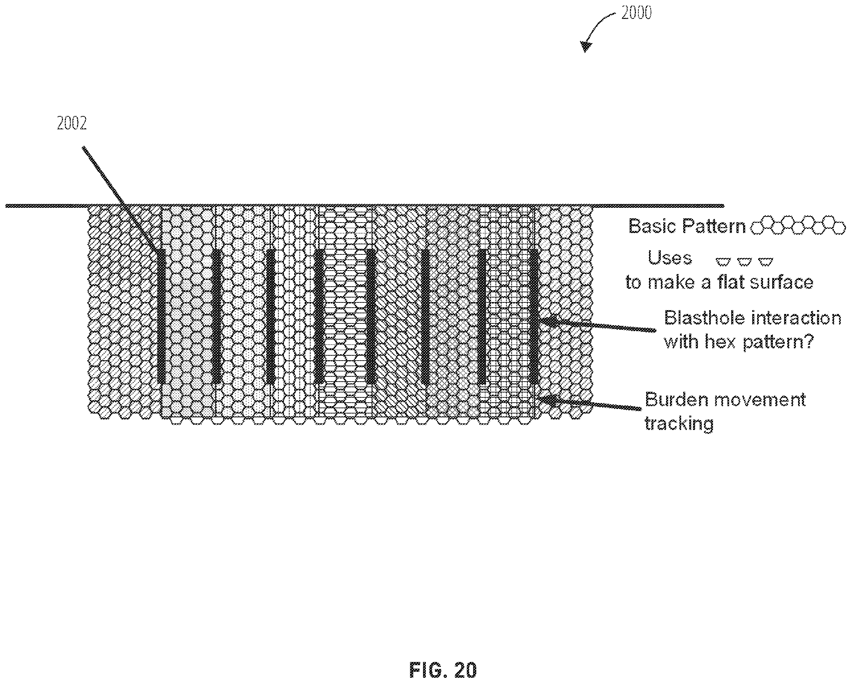

FIG. 20 illustrates a distinct element model 2000 generated by a modeling system to simulate a blast with no free face (e.g., buffer or choke blasting). Buffer or choke blasting is a blasting technique without a free face. A simulation using hexahedrals for buffer or choke blasting predicts ore has moved during the blasting. This prediction may allow a more precise excavation of the ore.

This type of blasting technique may be used for gold and copper mining. Gold and copper mining rely on simulations with high resolution. Based on the need for high resolution and the rock properties of gold and properties hexahedral elements may be used.

The hexahedral elements may comprise size lines indirectly coupled with arcs to form a polygon with rounded corners. The hexahedral elements may be cut in half to make a flat surface. Additionally, the hexahedral elements that interact with the blastholes (such as blasthole 2002) may be broken into two parts or truncated.

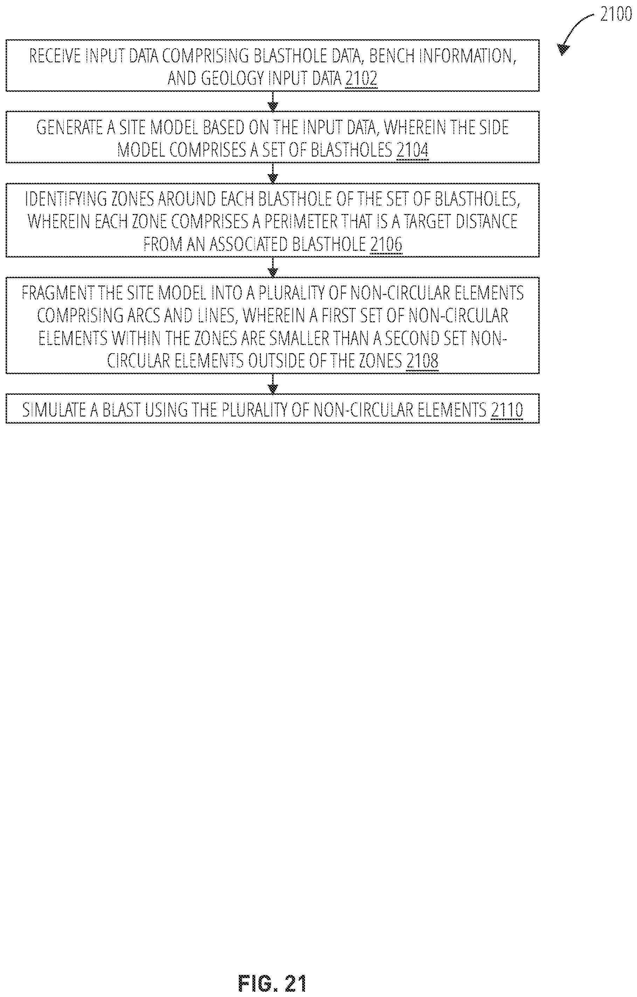

FIG. 21 illustrates a flowchart of a method 2100 for creating a model to simulate a blast. In block 2102, method 2100 receives input data comprising blasthole data, bench information, and geology input data. In block 2104, method 2100 generates a site model based on the input data, wherein the side model comprises a set of blastholes. In block 2106, method 2100 identifying zones around each blasthole of the set of blastholes, wherein each zone comprises a perimeter that is a target distance from an associated blasthole. In block 2108, method 2100 fragments the site model into a plurality of non-circular elements comprising arcs and lines, wherein a first set of non-circular elements within the zones are smaller than a second set non-circular elements outside of the zones. In block 2110, method 2100 simulates a blast using the plurality of non-circular elements.

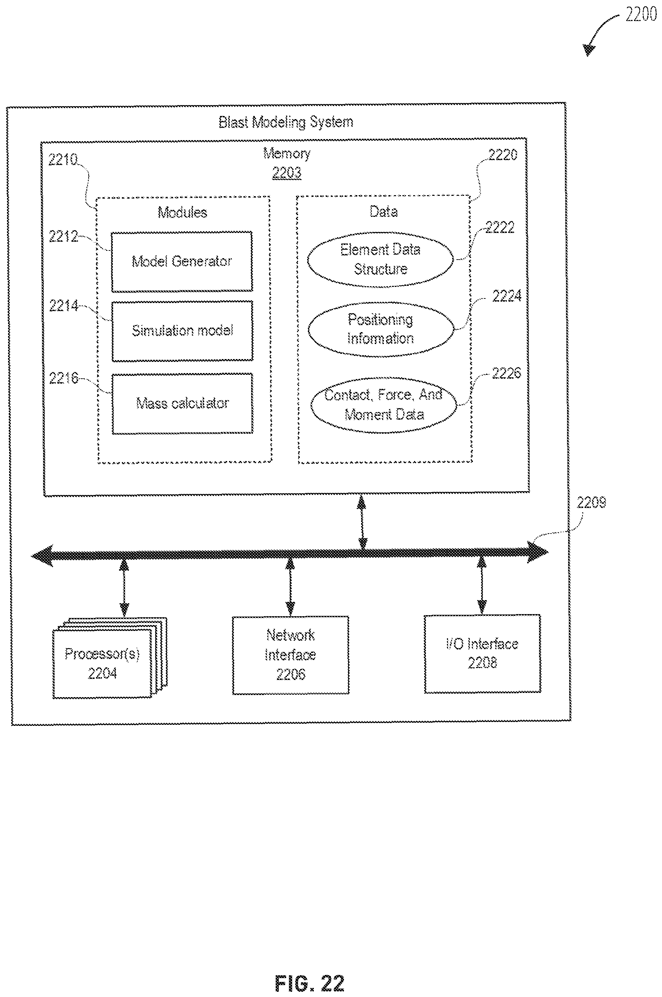

FIG. 22 is a block diagram of a blast modeling system 2200 according to one embodiment. The blast modeling system 2200 may perform the methods and use the techniques described with reference to the other figures in the specification. The blast modeling system 2200 can include a memory 2203, one or more processors 2204, a network interface 2206, an input/output interface 2208, and a system bus 2209.

The one or more processors 2204 may include one or more general purpose devices, such as an Intel®, AMID®, or other standard microprocessor. The one or more processors 2204 may include a special purpose processing device, such as ASIC, SoC, SiP, FPGA, PAL, PLA, FPLA, PLD, or other customized or programmable device. The one or more processors 2204 can perform distributed (e.g., parallel) processing to execute or otherwise implement functionalities of the presently disclosed embodiments. The one or more processors 2204 may run a standard operating system and perform standard operating system functions. It is recognized that any standard operating systems may be used, such as, for example, Microsoft® Windows®, Apple® MacOS®, Disk Operating System (DOS), UNIX, IRJX, Solaris, SunOS, FreeBSD, Linux®, ffiM® OS/2® operating systems, and so forth.

The memory 2203 may include static RAM, dynamic RAM, flash memory, one or more flip-flops, ROM, CD-ROM, DVD, disk, tape, or magnetic, optical, or other computer storage medium. The memory 2203 may include a plurality of program modules 2210 and program data 2220. The memory 2203 may be local to the blast modeling system 2200, as shown, or may be distributed and/or remote relative to the blast modeling system 2200.

The memory 2203 may include the data 2220. Data generated or used by the blast modeling system 2200, such as by the program modules 2210 or other modules, may be stored on the memory 2203, for example, as stored program data 2220. The data 2220 may be organized as one or more databases.

The data 2220 may include blast input data, element data structures 2222, positioning information 2224, and contact, force and moment data 2226. The blast input data may be entered by a user through the input/output interface 2208. In some embodiments, the blast input data may include blasthole data, bench information, and geology input data. The element data structures 2222 may include information related to the shape of each element of a blast model. For example, the element data structures 2222 may include line end-point node coordinates, designate arc end points, arc center points, arc radiuses, and arc angles. The positioning information 2224 may include location information for each of the elements of the blast model. For example, positioning information 2224 may include the coordinates of each of the elements and the orientation of each of the elements. The contact, force, and moment data 2226 may include the contact, force and moment for each element at a current timestep.

The program modules 2210 may include all or portions of other elements of the blast modeling system 2200. The program modules 2210 may run multiple operations concurrently or in parallel by or on the one or more processors 2204. In some embodiments, portions of the disclosed modules, components, and/or facilities are embodied as executable instructions embodied in hardware or firmware, or stored on a non-transitory, machine-readable storage medium. The executable instructions may comprise computer program code that, when executed by a processor and/or computing device, cause a computing system to implement certain processing steps, procedures, and/or operations, as disclosed herein. The modules, components, and/or facilities disclosed herein may be implemented and/or embodied as a driver, a library, an interface, an API, FPGA configuration data, firmware (e.g., stored on an EEPROM), and/or the like. In some embodiments, portions of the modules, components, and/or facilities disclosed herein are embodied as machine components, such as general and/or application-specific devices, including, but not limited to: circuits, integrated circuits, processing components, interface components, hardware controller(s), storage controller(s), programmable hardware, FPGAs, ASICs, and/or the like. Accordingly, the modules disclosed herein may be referred to as controllers, layers, services, engines, facilities, drivers, circuits, subsystems, and/or the like.

The modules 2210 may comprise a model generator 2212, a simulation model 2214, and a mass calculator 2216. The model generator 2212 may generate a site model based on the blast input data and fragment the site model into a plurality of elements. The mass calculator 2216 may calculate a mass for each element.

The simulation model 2214 may perform a simulation of a blast across multiple timesteps. For example, the simulation model 2214 may search the site model for the arc-to-arc contacts and the arc-to-line contacts and determine forces and moments resulting from the arc-to-arc contacts and the arc-to-line contacts. The simulation model 2214 may also change the position coordinates and orientation of each element based on total forces and moments to new positions. The new positions are to be used during a next timestep.

The input/output interface 2208 may facilitate user interaction with one or more input devices and/or one or more output devices. The input device(s) may include a keyboard, mouse, touchscreen, light pen, tablet, microphone, sensor, or other hardware with accompanying firmware and/or software. The output device(s) may include a monitor or other display, printer, speech or text synthesizer, switch, signal line, or other hardware with accompanying firmware and/or software. For example, in one embodiment, the input/output interface 2208 comprises a display to provide a graphical user interface (GUI) illustrating the potential ablation perimeters. The input/output interface 2208 can receive the user input data 2222. In some embodiments, the input/output interface 2208 is a touchscreen, and the size input is received via the touchscreen. In some embodiments, the input/output interface 2208 can superimpose the target ablation perimeters on an image of the tissue.

The network interface 2206 may facilitate communication with other computing devices and/or networks and/or other computing and/or communications networks. The network interface 2206 may be equipped with conventional network connectivity, such as, for example, Ethernet (IEEE 1102.3), Token Ring (IEEE 1102.5), Fiber Distributed Datalink Interface (FDDI), or Asynchronous Transfer Mode (ATM). Further, the network interface 2206 may be configured to support a variety of network protocols such as, for example, Internet Protocol (IP), Transfer Control Protocol (TCP), Network File System over UDP/TCP, Server Message Block (SMB), Microsoft® Common Internet File System (CIFS), Hypertext Transfer Protocols (HTTP), Direct Access File System (DAFS), File Transfer Protocol (FTP), Real-Time Publish Subscribe (RTPS), Open Systems Interconnection (OSI) protocols, Simple Mail Transfer Protocol (SMTP), Secure Shell (SSH), Secure Socket Layer (SSL), and so forth.

The system bus 2209 may facilitate communication and/or interaction between the other components of the blast modeling system 2200, including the one or more processors 2204, the memory 2203, the input/output interface 2208, and the network interface 2206.

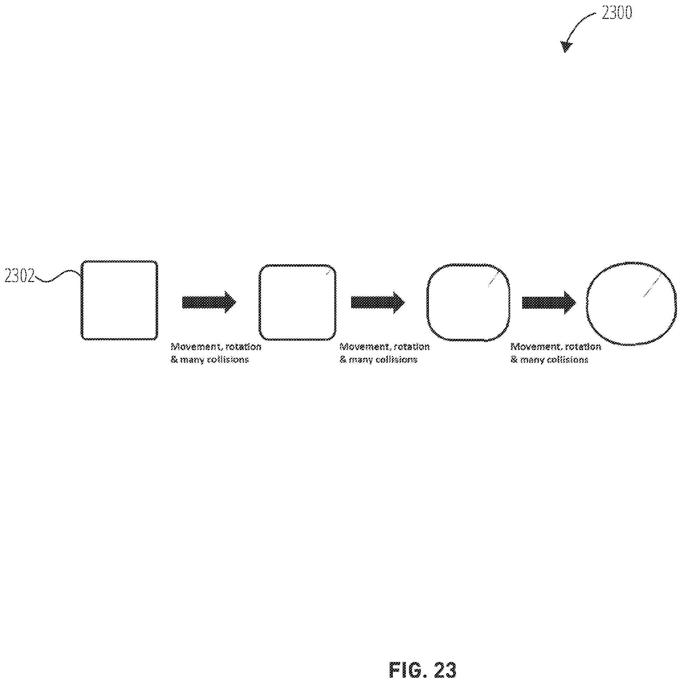

FIG. 23 illustrates a procedure 2300 for altering the shape of an element 2302 during a blast simulation. In a blast, as rocks roll, slide, and break down the rocks become more rounded. A modeling system may approximate that effect on the element 2300 by increasing a radius of each arc during a simulation based on one or more of movement of a corresponding element, rotation of the corresponding element, and collisions of the corresponding element. In other words, as the element 2300 moves and interacts with other elements, endpoints of the straight lines are moved closer together and the arcs radius expands.

The element 2300 may begin as a polygon (e.g., square) with tightly rounded corners (e.g., corners formed from arcs with small radiuses). The tightly rounded corners allow the elements to fit together well in the bench. However, the blast-induced movement of elements with such tightly rounded corners may be somewhat unnatural. Accordingly, the modeling system may track movement, rotation, and collisions of the element 2300 alter the shape of the element 2300 during the simulation. As the elements move, collide and rotate, the modeling system may increase the arc radius at the corners.

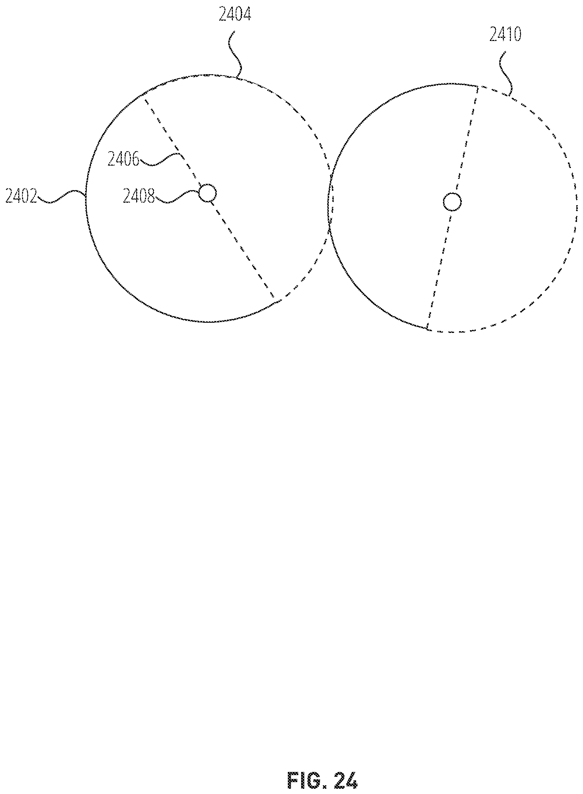

FIG. 24 illustrates two circular elements (i.e., first element 2404 and 2410) that may be used by the modeling systems and methods described herein. While the shapes used by the modeling systems may have straight lines, the modeling system may also be capable of using circular elements in a similar manner to model the rocks in a blast simulation.

For example, the modeling system may treat the circular elements by creating circular elements with one arc center point 2408 and two one-hundred and eighty degree arcs (e.g., first arc 2402 and 2404). As shown, the first element 2404 is overlapping with the second element 2410. Using the one arc center arc center point and the two arcs the modeling system can determine the movement of the elements using the methods described previously.

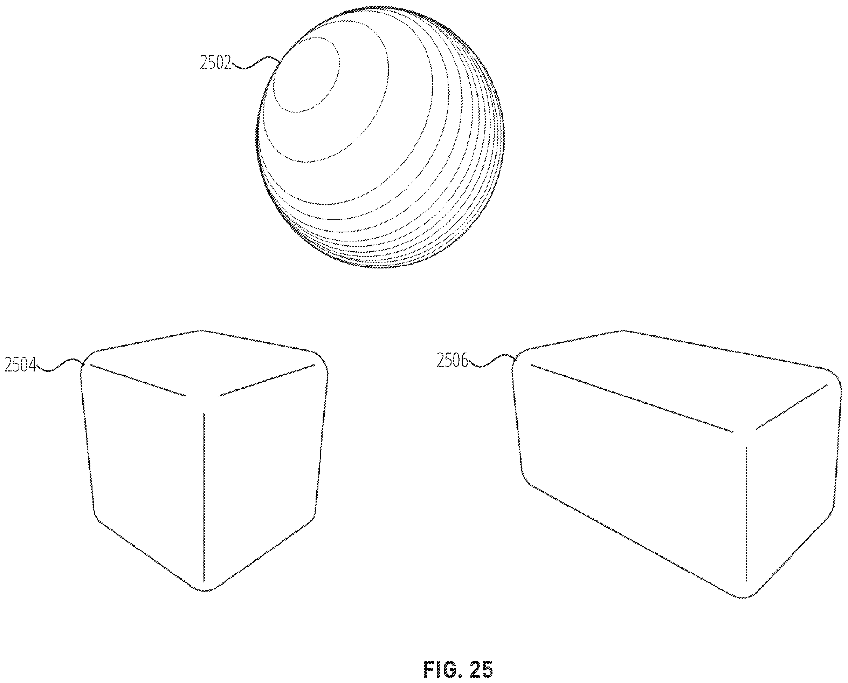

FIG. 25 illustrates three potential three-dimensional shapes that may be used as elements by the modeling systems and methods described herein. The illustrated embodiment includes a spherical element 2502, a quadrilateral element 2504, and a cuboid element 2506. The methods and systems described herein may use these shapes to model a three-dimensional blast. As shown, each of these elements may include rounded edges and corners. The radii of the rounded edges and corners may be used to determine the movement of the element using the methods described herein.

In some embodiments, the spherical element 2502 may be modeled using a three-dimensional hexahedral shape with rounded corners and edges. The contact behavior of a three-dimensional hexahedral shape with rounded surfaces may not be significantly different from a sphere.

While the examples and embodiments disclosed herein refer specially to blasting simulations, the advanced distinct elements and simulation methods may be applied to a variety of different simulation applications. For example, the elements described herein may be used to simulate movement of liquids, solutions, gases, materials in storage silos, and powders. The simulation methods may be used for various applications and in a plurality of industries. For example, the simulation methods may be used to simulate earthquakes, drilling and retrieval of oil and gas, and mineral processing. Embodiments of distinct elements disclosed herein may also be used to model, understand and design milling of mineral ores using a grinding entity such as high strength steel rods or balls within the milling cylinder. The ore and grinding entity could both be more accurately represented by the advanced distinct elements. Embodiments related to distinct element corner rounding based on movement and collisions could be especially helpful for mill modeling.

Some embodiments of a more generalized method to simulate moving objects may include generating a model comprising a plurality of advanced distinct elements as described with reference to the above figures. Each element may have a shape formed by connecting endpoints of one or more lines with arcs such that the endpoints of the one or more lines are indirectly coupled via the arcs. Simulating movement of the plurality of elements may be done by performing a timestep simulation that iteratively steps through time. For each timestep of the simulation the method may search for and detect arc-to-arc contacts and arc-to-line contacts between neighboring elements. The method may also determine forces and moments resulting from the arc-to-arc contacts and the arc-to-line contacts. The forces and moments may be summed and used to move each element to new positions to be used during a next timestep.

The examples and embodiments disclosed herein are to be construed as merely illustrative and exemplary and not a limitation of the scope of the present disclosure in any way. It will be apparent to those having skill in the art, and having the benefit of this disclosure, that changes may be made to the details of the above-described embodiments without departing from the underlying principles of the disclosure herein.

Particular aspects of the invention are set out in the following numbered paragraphs:

1. A method for explosive blast modeling, the method comprising: receiving a blast plan comprising blasthole data and blasting site data; generating a site model based on the blast plan, the site model comprising a plurality of elements, wherein each element has a shape formed by connecting endpoints of one or more lines with arcs such that the endpoints of the one or more lines are indirectly coupled via the arcs; and simulating a blast using the site model and the plurality of elements.

2. The method of paragraph 1, wherein a radius of each arc increases and a length of each of the one or more lines decreases based on one or more of movement of a corresponding element, rotation of the corresponding element, and collisions of the corresponding element.

3. The method of paragraph 1, wherein simulating the blast comprises detecting contact between neighboring elements, wherein detecting contact comprises: detecting arc-to-arc contacts between the neighboring elements; and detecting arc-to-line contacts between the neighboring elements.

4. The method of paragraph 3, wherein detecting arc-to-arc contact between the neighboring elements comprises comparing a distance between arc center points of two arcs of the neighboring elements to a sum of radiuses of the two arcs of the neighboring elements, wherein contact is detected when the sum is greater than the distance.

5. The method of paragraph 3, wherein detecting arc-to-line contact between the neighboring elements comprises comparing a distance between a line of a first element and an arc center of an arc of a second element to a radius of the arc of the second element, wherein contact is detected when the radius is greater than the distance.

6. The method of paragraph 1, wherein simulating the blast comprises calculating a force applied to each element by contacting neighbor elements, wherein the force is calculated based on a contact overlap and is applied to arc center points.

7. The method of paragraph 1, wherein the shape of each element is a polygon with rounded corners.

8. The method of paragraph 7, wherein at least some of the elements are different shapes.

9. The method of paragraph 7, wherein at least some of the elements of a same shape are different sizes.

10. The method of paragraph 1, wherein simulating the blast comprises a timestep simulation that iteratively steps through time, wherein for each timestep of the simulation the method further comprises: searching the site model for arc-to-arc contacts and arc-to-line contacts; determining forces resulting from the arc-to-arc contacts and the arc-to-line contacts; determining moments for each element; summing the moments and the forces for each element; and moving each element based on total forces and moments to new positions, wherein the new positions are used during a next timestep.

11. A computing apparatus, the computing apparatus comprising: a processor; and a memory storing instructions that, when executed by the processor, configure the apparatus to: receive a blast plan comprising blasthole data and blasting site data; generate a site model based on the blast plan, the site model comprising a plurality of elements, wherein each element has a shape formed by connecting endpoints of one or more lines with arcs such that the endpoints of the one or more lines are indirectly coupled via the arcs; and simulate a blast using the site model and the plurality of elements.

12. The computing apparatus of paragraph 11, wherein a radius of each arc increases based on one or more of movement of a corresponding element, rotation of the corresponding element, and collisions of the corresponding element.

13. The computing apparatus of paragraph 11, wherein simulating the blast comprises detect contact between neighboring elements, wherein detecting contact comprises: detect arc-to-arc contacts between the neighboring elements; and detect arc-to-line contacts between the neighboring elements.

14. The computing apparatus of paragraph 13, wherein detecting arc-to-arc contact between the neighboring elements comprises compare a distance between arc center points of two arcs of the neighboring elements to a sum of radiuses of the two arcs of the neighboring elements, wherein contact is detected when the sum is greater than the distance.

15. The computing apparatus of paragraph 13, wherein detecting arc-to-line contact between the neighboring elements comprises compare a distance between a line of a first element and an arc center of an arc of a second element to a radius of the arc of the second element, wherein contact is detected when the radius is greater than the distance.

16. The computing apparatus of paragraph 11, wherein simulating the blast comprises calculate a force applied to each element by contacting neighbor elements, wherein the force is calculated based on a contact overlap and is applied to arc center points.

17. The computing apparatus of paragraph 11, wherein the shape of each element is a polygon with rounded corners.

18. The computing apparatus of paragraph 17, wherein at least some of the elements are different shapes.

19. The computing apparatus of paragraph 17, wherein at least some of the elements of a same shape are different sizes.

20. The computing apparatus of paragraph 11, wherein simulating the blast comprises a timestep simulation that iteratively steps through time, wherein for each timestep of the simulation the method further comprises: search the site model for arc-to-arc contacts and arc-to-line contacts; determine forces resulting from the arc-to-arc contacts and the arc-to-line contacts; determine moments for each element; sum the moments and the forces for each element; and move each element based on total forces and moments to new positions, wherein the new positions are used during a next timestep.

21. A non-transitory computer-readable storage medium, the computer-readable storage medium including instructions that when executed by a computer, cause the computer to: receive a blast plan comprising blasthole data and blasting site data; generate a site model based on the blast plan, the site model comprising a plurality of elements, wherein each element has a shape formed by connecting endpoints of one or more lines with arcs such that the endpoints of the one or more lines are indirectly coupled via the arcs; and simulate a blast using the site model and the plurality of elements.

22. The computer-readable storage medium of paragraph 21, wherein a radius of each arc increases based on one or more of movement of a corresponding element, rotation of the corresponding element, and collisions of the corresponding element.

23. The computer-readable storage medium of paragraph 21, wherein simulating the blast comprises detect contact between neighboring elements, wherein detecting contact comprises: detect arc-to-arc contacts between the neighboring elements; and detect arc-to-line contacts between the neighboring elements.

24. The computer-readable storage medium of paragraph 23, wherein detecting arc-to-arc contact between the neighboring elements comprises compare a distance between arc center points of two arcs of the neighboring elements to a sum of radiuses of the two arcs of the neighboring elements, wherein contact is detected when the sum is greater than the distance.

25. The computer-readable storage medium of paragraph 23, wherein detecting arc-to-line contact between the neighboring elements comprises compare a distance between a line of a first element and an arc center of an arc of a second element to a radius of the arc of the second element, wherein contact is detected when the radius is greater than the distance.

26. The computer-readable storage medium of paragraph 21, wherein simulating the blast comprises calculate a force applied to each element by contacting neighbor elements, wherein the force is calculated based on a contact overlap and is applied to arc center points.

27. The computer-readable storage medium of paragraph 21, wherein the shape of each element is a polygon with rounded corners.

28. The computer-readable storage medium of paragraph 27, wherein at least some of the elements are different shapes.

29. The computer-readable storage medium of paragraph 27, wherein at least some of the elements of a same shape are different sizes.

30. The computer-readable storage medium of paragraph 21, wherein simulating the blast comprises a timestep simulation that iteratively steps through time, wherein for each timestep of the simulation the method further comprises: search the site model for arc-to-arc contacts and arc-to-line contacts; determine forces resulting from the arc-to-arc contacts and the arc-to-line contacts; determine moments for each element; sum the moments and the forces for each element; and move each element based on total forces and moments to new positions, wherein the new positions are used during a next timestep.

31. A method for explosive blast modeling, the method comprising: receiving a blast plan comprising blasthole data and blasting site data; generating a site model based on the blast plan, the site model comprising into a plurality of elements; and simulating a blast using the site model and the plurality of elements, wherein simulating the blast comprises: detecting arc-to-arc contacts between neighboring elements; and detecting arc-to-line contacts between the neighboring elements.

32. The method of paragraph 31, wherein radiuses of arcs of the elements increase based on one or more of movement of a corresponding element, rotation of the corresponding element, and collisions of the corresponding element.

33. The method of paragraph 31, wherein each element has a shape formed by connecting end points of one or more lines with arcs such that the two or more lines are indirectly coupled via the arcs.

34. The method of paragraph 31, wherein detecting arc-to-arc contact between the neighboring elements comprises comparing a distance between arc center points of two arcs of the neighboring elements to a sum of radiuses of the two arcs of the neighboring elements, wherein contact is detected when the sum is greater than the distance.

35. The method of paragraph 31, wherein detecting arc-to-line contact between the neighboring elements comprises comparing a distance between a line of a first element and an arc center of an arc of a second element to a radius of the arc of the second element, wherein contact is detected when the radius is greater than the distance.

36. The method of paragraph 31, wherein simulating the blast comprises calculating a force applied to each element by contacting neighbor elements, wherein the force is calculated based on a contact overlap and is applied to arc center points.

37. The method of paragraph 31, wherein each element is a polygon with rounded corners.

38. The method of paragraph 37, wherein at least some of the elements are different shapes.

39. The method of paragraph 37, wherein at least some of the elements of a same shape are different sizes.

40. The method of paragraph 31, wherein simulating the blast further comprises a timestep simulation that iteratively steps through time, wherein for each timestep of the simulation the method further comprises: searching the site model for the arc-to-arc contacts and the arc-to-line contacts; determining forces resulting from the arc-to-arc contacts and the arc-to- line contacts; determining moments for each element; summing the moments and the forces for each element; and moving each element based on total forces and moments to new positions, wherein the new positions are used during a next timestep.

41. A computing apparatus, the computing apparatus comprising: a processor; and a memory storing instructions that, when executed by the processor, configure the apparatus to: receive a blast plan comprising blasthole data and blasting site data; generate a site model based on the blast plan, the site model comprising into a plurality of elements; and simulate a blast using the site model and the plurality of elements, wherein simulating the blast comprises: detect arc-to-arc contacts between neighboring elements; and detect arc-to-line contacts between the neighboring elements.

42. The computing apparatus of paragraph 41, wherein radiuses of arcs of the elements increase based on one or more of movement of a corresponding element, rotation of the corresponding element, and collisions of the corresponding element.

43. The computing apparatus of paragraph 41, wherein each element has a shape formed by connecting end points of one or more lines with arcs such that the two or more lines are indirectly coupled via the arcs.

44. The computing apparatus of paragraph 41, wherein detecting arc-to-arc contact between the neighboring elements comprises compare a distance between arc center points of two arcs of the neighboring elements to a sum of radiuses of the two arcs of the neighboring elements, wherein contact is detected when the sum is greater than the distance.

45. The computing apparatus of paragraph 41, wherein detecting arc-to-line contact between the neighboring elements comprises compare a distance between a line of a first element and an arc center of an arc of a second element to a radius of the arc of the second element, wherein contact is detected when the radius is greater than the distance.

46. The computing apparatus of paragraph 41, wherein simulating the blast comprises calculate a force applied to each element by contacting neighbor elements, wherein the force is calculated based on a contact overlap and is applied to arc center points.

47. The computing apparatus of paragraph 41, wherein each element is a polygon with rounded corners.

48. The computing apparatus of paragraph 47, wherein at least some of the elements are different shapes.

49. The computing apparatus of paragraph 47, wherein at least some of the elements of a same shape are different sizes.

50. The computing apparatus of paragraph 41, wherein simulating the blast further comprises a timestep simulation that iteratively steps through time, wherein for each timestep of the simulation the method further comprises: search the site model for the arc-to-arc contacts and the arc-to-line contacts; determine forces resulting from the arc-to-arc contacts and the arc-to-line contacts; determine moments for each element; sum the moments and the forces for each element; and move each element based on total forces and moments to new positions, wherein the new positions are used during a next timestep.

51. A non-transitory computer-readable storage medium, the computer-readable storage medium including instructions that when executed by a computer, cause the computer to: receive a blast plan comprising blasthole data and blasting site data; generate a site model based on the blast plan, the site model comprising into a plurality of elements; and simulate a blast using the site model and the plurality of elements, wherein simulating the blast comprises: detect arc-to-arc contacts between neighboring elements; and detect arc-to-line contacts between the neighboring elements.

52. The computer-readable storage medium of paragraph 51, wherein radiuses of arcs of the elements increase based on one or more of movement of a corresponding element, rotation of the corresponding element, and collisions of the corresponding element.

53. The computer-readable storage medium of paragraph 51, wherein each element has a shape formed by connecting end points of one or more lines with arcs such that the two or more lines are indirectly coupled via the arcs.

54. The computer-readable storage medium of paragraph 51, wherein detecting arc-to-arc contact between the neighboring elements comprises compare a distance between arc center points of two arcs of the neighboring elements to a sum of radiuses of the two arcs of the neighboring elements, wherein contact is detected when the sum is greater than the distance.

55. The computer-readable storage medium of paragraph 51, wherein detecting arc-to-line contact between the neighboring elements comprises compare a distance between a line of a first element and an arc center of an arc of a second element to a radius of the arc of the second element, wherein contact is detected when the radius is greater than the distance.

56. The computer-readable storage medium of paragraph 51, wherein simulating the blast comprises calculate a force applied to each element by contacting neighbor elements, wherein the force is calculated based on a contact overlap and is applied to arc center points.

57. The computer-readable storage medium of paragraph 51, wherein each element is a polygon with rounded corners.

58. The computer-readable storage medium of paragraph 57, wherein at least some of the elements are different shapes.

59. The computer-readable storage medium of paragraph 57, wherein at least some of the elements of a same shape are different sizes.

60. The computer-readable storage medium of paragraph 51, wherein simulating the blast further comprises a timestep simulation that iteratively steps through time, wherein for each timestep of the simulation the method further comprises: search the site model for the arc-to-arc contacts and the arc-to-line contacts; determine forces resulting from the arc-to-arc contacts and the arc-to-line contacts; determine moments for each element; sum the moments and the forces for each element; and move each element based on total forces and moments to new positions, wherein the new positions are used during a next timestep.

61. A method for explosive blast modeling, the method comprising: receiving input data comprising blasthole data, bench information, and geology input data; generating a site model based on the input data, wherein the side model comprises a set of blastholes; identifying zones around each blasthole of the set of blastholes, wherein each zone comprises a perimeter that is a target distance from an associated blasthole; fragmenting the site model into a plurality of non-circular elements comprising arcs and lines, wherein a first set of non-circular elements within the zones are smaller than a second set non-circular elements outside of the zones; and simulating a blast using the plurality of non-circular elements.

62. The method of paragraph 61, further comprising offsetting layers of the plurality of non-circular elements.

63. The method of paragraph 61, further comprising truncating elements that cross a bench face or a blasthole.

64. The method of paragraph 61, further comprising determining a mass for each of the plurality of non-circular elements by multiplying an area of an element by spacing and rock density.

65. The method of paragraph 61, further comprising rotating the site model to create a geology dip.

66. The method of paragraph 61, further comprising identifying a burden release time for the plurality of non-circular elements.

67. The method of paragraph 61, extending, if the blastholes are subdrilled, extending the non-circular elements beneath a blast pit beyond a bench face by a length of a first burden.

68. A computing apparatus, the computing apparatus comprising: a processor; and a memory storing instructions that, when executed by the processor, configure the apparatus to: receive input data comprising blasthole data, bench information, and geology input data; generate a site model based on the input data, wherein the side model comprises a set of blastholes; identify zones around each blasthole of the set of blastholes, wherein each zone comprises a perimeter that is a target distance from an associated blasthole; fragment the site model into a plurality of non-circular elements comprising arcs and lines, wherein a first set of non-circular elements within the zones are smaller than a second set non-circular elements outside of the zones; and simulate a blast using the plurality of non-circular elements.

69. The computing apparatus of paragraph 68, wherein the instructions further configure the apparatus to offset layers of the plurality of non-circular elements.

70. The computing apparatus of paragraph 68, wherein the instructions further configure the apparatus to truncate elements that cross a bench face or a blasthole.

71. The computing apparatus of paragraph 68, wherein the instructions further configure the apparatus to determine a mass for each of the plurality of non circular elements by multiplying an area of an element by spacing and rock density.

72. The computing apparatus of paragraph 68, wherein the instructions further configure the apparatus to rotate the site model to create a geology dip.

73. The computing apparatus of paragraph 68, wherein the instructions further configure the apparatus to identify a burden release time for the plurality of non circular elements.

74. The computing apparatus of paragraph 68, extend, if the blastholes are subdrilled, extending the non-circular elements beneath a blast pit beyond a bench face by a length of a first burden.

75. A non-transitory computer-readable storage medium, the computer-readable storage medium including instructions that when executed by a computer, cause the computer to: receive input data comprising blasthole data, bench information, and geology input data; generate a site model based on the input data, wherein the side model comprises a set of blastholes; identify zones around each blasthole of the set of blastholes, wherein each zone comprises a perimeter that is a target distance from an associated blasthole; fragment the site model into a plurality of non-circular elements comprising arcs and lines, wherein a first set of non-circular elements within the zones are smaller than a second set non-circular elements outside of the zones; and simulate a blast using the plurality of non-circular elements.

76. The computer-readable storage medium of paragraph 75, wherein the instructions further configure the computer to offset layers of the plurality of non-circular elements.

77. The computer-readable storage medium of paragraph 75, wherein the instructions further configure the computer to truncate elements that cross a bench face or a blasthole.

78. The computer-readable storage medium of paragraph 75, wherein the instructions further configure the computer to determine a mass for each of the plurality of non-circular elements by multiplying an area of an element by spacing and rock density.

79. The computer-readable storage medium of paragraph 75, wherein the instructions further configure the computer to rotate the site model to create a geology dip.

80. The computer-readable storage medium of paragraph 75, wherein the instructions further configure the computer to identify a burden release time for the plurality of non-circular elements.

81. The computer-readable storage medium of paragraph 75, extend, if the blastholes are subdrilled, extending the non-circular elements beneath a blast pit beyond a bench face by a length of a first burden.

82. A method for modeling moving objects, the method comprising: generating a model comprising a plurality of elements, wherein each element has a shape formed by connecting endpoints of one or more lines with arcs such that the endpoints of the one or more lines are indirectly coupled via the arcs; and simulating movement of the plurality of elements by: detecting arc-to-arc contacts between neighboring elements; and detecting arc-to-line contacts between the neighboring elements.

83. The method of paragraph 82, wherein simulating the movement comprises performing a timestep simulation that iteratively steps through time, wherein for each timestep of the simulation the method further comprises: searching the model for the arc-to-arc contacts and the arc-to-line contacts; determining forces resulting from the arc-to-arc contacts and the arc-to- line contacts; determining moments for each element; summing the moments and the forces for each element; and moving each element based on total forces and moments to new positions, wherein the new positions are used during a next timestep.

**EP 4 567 655 A2**

**Claims**

1. A method for explosive blast modeling, the method comprising:

   receiving input data comprising blasthole data, bench information, and geology input data;
   generating a site model based on the blast plan, the site model comprising a set of blastholes,
   identifying zones around each blasthole of the set of blastholes, wherein each zone comprises a perimeter that is a target distance from an associated blasthole;
   fragmenting the site model into a plurality of elements, wherein a first set of elements within the zones are smaller than a second set of elements outside of the zones,
   wherein each element has a shape formed by connecting endpoints of one or more lines with arcs such that the endpoints of the one or more lines are indirectly coupled via the arcs; and
   simulating a blast using the plurality of elements.

2. The method of claim 1, wherein a radius of each arc increases and a length of each of the one or more lines decreases based on one or more of movement of a corresponding element, rotation of the corresponding element, and collisions of the corresponding element.

3. The method of claim 1 or 2, wherein simulating the blast comprises detecting contact between neighboring elements, wherein detecting contact comprises:

   detecting arc-to-arc contacts between the neighboring elements; and
   detecting arc-to-line contacts between the neighboring elements.

4. The method of claim 3, wherein detecting arc-to-arc contact between the neighboring elements comprises comparing a distance between arc center points of two arcs of the neighboring elements to a sum of radiuses of the two arcs of the neighboring elements, wherein contact is detected when the sum is greater than the distance.

5. The method of claim 3, wherein detecting arc-to-line contact between the neighboring elements comprises comparing a distance between a line of a first element and an arc center of an arc of a second element to a radius of the arc of the second element, wherein contact is detected when the radius is greater than the distance.

6. The method of any one of claims 1 to 5, wherein simulating the blast comprises calculating a force applied to each element by contacting neighbor elements, wherein the force is calculated based on a contact overlap and is applied to arc center points.

7. The method of any one of claims 1 to 6, wherein simulating the blast comprises a timestep simulation that iteratively steps through time, wherein for each timestep of the simulation the method further comprises:

   searching the site model for arc-to-arc contacts and arc-to-line contacts;
   determining forces resulting from the arc-to-arc contacts and the arc-to-line contacts;
   determining moments for each element;
   summing the moments and the forces for each element; and
   moving each element based on total forces and moments to new positions, wherein the new positions are used during a next timestep.

8. The method of any one of claims 1 to 7, further comprising offsetting layers of the plurality of elements.

9. The method of any one of claims 1 to 8, further comprising truncating elements that cross a bench face or a blasthole.

10. The method of any one of claims 1 to 9, further comprising determining a mass for each of the plurality of elements by multiplying an area of an element by spacing and rock density.

11. The method of any one of claims 1 to 10, further comprising rotating the site model to create a geology dip.

12. The method of any one of claims 1 to 11, further comprising identifying a burden release time for the plurality of elements.

**13.** The method of any one of claims 1 to 12, extending, if the blastholes are subdrilled, extending the elements beneath a blast pit beyond a bench face by a length of a first burden.

**14.** A computing apparatus, the computing apparatus comprising:

a processor; and
a memory storing instructions that, when executed by the processor, configure the apparatus to perform the method of any one of claims 1 to 13.

**15.** A non-transitory computer-readable storage medium, the computer-readable storage medium including instructions that when executed by a computer, cause the computer to perform the method of any one of claims 1 to 14.

FIG. 1

Compare D to (R1+R2)

FIG. 2

D = distance-point-to-line

(using dot product)

Compare D to R1

**FIG. 3**

Detected by Arc to Line
Contacts

FIG. 4

$$F = K\Delta$$

K=Spring Constant

**FIG. 5**

$$M = F \times r$$

FIG. 6

700

```
┌─────────────────────────────────────────────────┐
│   RECEIVE A BLAST PLAN COMPRISING BLASTHOLE       │
│   DATA AND BLASTING SITE DATA 702                 │
└─────────────────────────────────────────────────┘
                        │
                        ▼
┌─────────────────────────────────────────────────┐
│   GENERATE A TWO-DIMENSIONAL SITE MODEL BASED     │
│   ON THE BLAST PLAN, THE TWO-DIMENSIONAL SITE     │
│   MODEL COMPRISING A PLURALITY OF ELEMENTS 704    │
└─────────────────────────────────────────────────┘
                        │
                        ▼
┌─────────────────────────────────────────────────┐
│   SIMULATE A BLAST USING THE TWO-DIMENSIONAL      │
│   SITE MODEL AND THE PLURALITY OF ELEMENTS 706    │
└─────────────────────────────────────────────────┘
```

FIG. 7

800

SEARCH THE TWO-DIMENSIONAL SITE MODEL FOR ARC-TO-ARC CONTACTS AND ARC-TO-LINE CONTACTS 806

DETERMINE FORCES RESULTING FROM THE ARC-TO-ARC CONTACTS AND THE ARC-TO-LINE CONTACTS 808

DETERMINE MOMENTS FOR EACH ELEMENT 810

SUM THE MOMENTS AND THE FORCES FOR EACH ELEMENT 812

MOVE EACH ELEMENT BASED ON TOTAL FORCES AND MOMENTS TO NEW POSITIONS, WHEREIN THE NEW POSITIONS ARE USED DURING A NEXT TIMESTEP 814

ADD TIMESTEP 816

NO

TOTAL EXECUTION TIME COMPLETED? 804

YES

END 802

FIG. 8

FIG. 9

FIG. 10

Zones with elements ½ size ☐

**FIG. 11**

EP 4 567 655 A2

EP 4 567 655 A2

1200

60% Passing Size

30% Passing Size

1202

1204

**FIG. 12**

1300

Offset each consecutive layer by ½ element

In a logical way, cut elements off at the face, vertically with the front edge crossing the face

1302

Delete elements below a defined size threshold

1306

1304

Y

X

FIG. 13

Offset each consecutive layer by ½ element

Pit formed with immobile elements

1400

1402

FIG. 14

1500

Burden, spacing, stemming, hole angle, hole depth, hole diameter and explosive type can be customized for each row.

Burden and spacing are defined on bench top. Hole depth and stemming are defined from the bench top.

**FIG. 15**

Blast Pattern Top View

1602

1604

2D Computation Plane

Blasthole Spacing (s)

element mass = area x spacing x rock density

FIG. 16

EP 4 567 655 A2

FIG. 17

Create Model with zero Geology Dip
and then rotate

**FIG. 18**

EP 4 567 655 A2

EP 4 567 655 A2

1910  1908  1906  1904  1902

Remaining "New" free face.

1912

1914

Y

X

1900

**FIG. 19**

FIG. 20

2100

RECEIVE INPUT DATA COMPRISING BLASTHOLE DATA, BENCH INFORMATION, AND GEOLOGY INPUT DATA 2102

GENERATE A SITE MODEL BASED ON THE INPUT DATA, WHEREIN THE SIDE MODEL COMPRISES A SET OF BLASTHOLES 2104

IDENTIFYING ZONES AROUND EACH BLASTHOLE OF THE SET OF BLASTHOLES, WHEREIN EACH ZONE COMPRISES A PERIMETER THAT IS A TARGET DISTANCE FROM AN ASSOCIATED BLASTHOLE 2106

FRAGMENT THE SITE MODEL INTO A PLURALITY OF NON-CIRCULAR ELEMENTS COMPRISING ARCS AND LINES, WHEREIN A FIRST SET OF NON-CIRCULAR ELEMENTS WITHIN THE ZONES ARE SMALLER THAN A SECOND SET NON-CIRCULAR ELEMENTS OUTSIDE OF THE ZONES 2108

SIMULATE A BLAST USING THE PLURALITY OF NON-CIRCULAR ELEMENTS 2110

FIG. 21

2200

## Blast Modeling System

### Memory 2203

2210

#### Modules

2212 — Model Generator

2214 — Simulation model

2216 — Mass calculator

2220

#### Data

2222 — Element Data Structure

2224 — Positioning Information

2226 — Contact, Force, And Moment Data

2209

Processor(s) 2204

Network Interface 2206

I/O Interface 2208

**FIG. 22**

FIG. 23

FIG. 24

FIG. 25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 17324704 B
- US 63124412
- US 63028345